# EUROPEAN PATENT SPECIFICATION

(11) **EP 3 246 229 B1**
(45) Date of publication and mention of the grant of the patent: **16.12.2020**
(21) Application number: 17169850.9
(22) Date of filing: 08.05.2017
(51) Int. Cl.: B62D 15/02, B60W 30/06, B60W 10/20, B60W 50/00, B62D 11/24, B60W 10/184, B60W 50/14, B60W 10/04

(54) **VEHICLE COMPRISING A PARKING CONTROL APPARATUS**
FAHRZEUG MIT EINER EINPARKSTEUERUNGSVORRICHTUNG
VÉHICULE AVEC UN APPAREIL DE COMMANDE DE STATIONNEMENT

(30) Priority: 18.05.2016 KR 20160060977; 18.05.2016 KR 20160060979
(43) Date of publication of application: 22.11.2017
(73) Proprietor: LG Electronics, Inc., Yeongdeungpo-Gu Seoul 07336 (KR)
(72) Inventor: LEE, Jinkyo, 07336 Seoul (KR); JANG, Kwangjin, 07336 Seoul (KR); YOON, Sangyol, 07336 Seoul (KR)
(74) Representative: Frenkel, Matthias Alexander

(56) References cited:
- WO-A1-2014/001067
- DE-A1-102009 026 915
- JP-A- H10 264 839
- US-A1- 2005 209 763
- US-A1- 2005 273 236

## Description

### BACKGROUND OF THE INVENTION

### 1. Field of the invention

The present invention relates to a parking control apparatus for vehicles and a vehicle having the parking control apparatus.

### 2. Description of the Related Art

A vehicle is an apparatus that moves in a direction desired by a user riding therein. A representative example of a vehicle may be an automobile.

Meanwhile, a variety of sensors and electronic devices have been mounted in vehicles for the convenience of a user who uses the vehicle. In particular, for user driving convenience, an Advanced Driver Assistance System (ADAS) has been actively studied. In addition, autonomous vehicles have been actively developed.

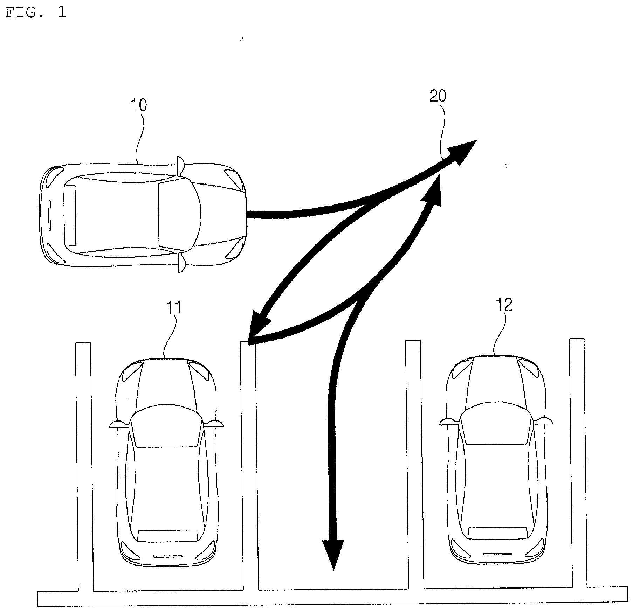

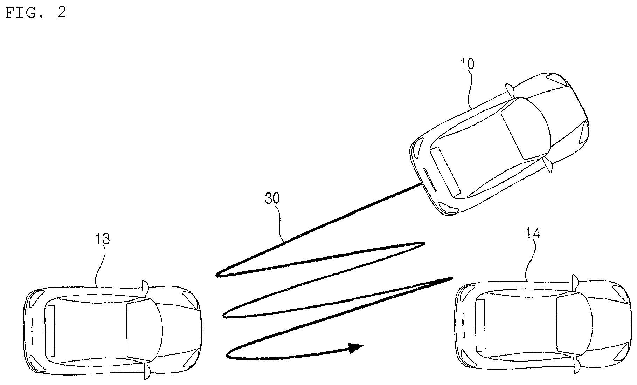

FIGS. 1 and 2 are reference views illustrating conventional parking methods.

As illustrated in FIG. 1, it is necessary to move a vehicle 10 in the forward direction, to move the vehicle 10 rearward, and to steer (20) the vehicle 10 repeatedly several times in order to park the vehicle 10 in the perpendicular parking state between a plurality of nearby vehicles 11 and 12.

As illustrated in FIG. 2, it is necessary to move the vehicle 10 in the forward direction, to move the vehicle 10 rearward, and to steer (30) the vehicle 10 repeatedly several times in order to park the vehicle 10 in the parallel parking state between a plurality of nearby vehicles 13 and 14.

When a driver manually parks the vehicle as shown in FIGS. 1 and 2, it may be bothersome for the driver. It may be difficult for an inexperienced driver to perform the above-mentioned parking actions. Even an experienced driver takes a lot of time to move the vehicle in the forward direction, to move the vehicle rearward, and to steer the vehicle.

Therefore, there is a high need to develop a parking control apparatus for vehicles that is capable of easily and conveniently performing the conventional parking methods within a short time.

As an example, International Patent Application Publication No. 2014/001067 A1 discloses a method for operating a park pilot system in a fully automatic mode for parking a vehicle in a target parking space, said fully automatic mode of operation including braking at least one wheel of the vehicle and simultaneously apply acceleration to the other wheels to derive a desired angle of trajectory during the execution of a parking maneuver.

Furthermore, German Patent Application Publication No. 10 2009 026915 A1 discloses a device having two powered wheels which are independently driven in a pre-settable parking mode. A control unit determines necessary speeds of the individual wheels based on a steering wheel angle and controls hub drives that are driven in different directions.

Still further, U.S. Patent Application Publication No. 2005/273236 A1 discloses an automatic steering control apparatus for a vehicle configured to perform automatic parking control for automatically steering steerable wheels of a vehicle such that the actual steering angle of the steerable wheels follows a changing target steering angle. In case the actual steering angle fails to follow the target steering angle due to insufficiency of the steering drive force of a steering actuator, a braking force difference imparting control is performed so as to apply a predetermined braking force on the steerable wheel located inside a target vehicle locus.

On the other hand, Japanese Patent Application Publication No. H10 264839 A discloses an automatic parking device which is configured for steering front wheels of a vehicle through a front wheel steering mechanism and rear wheels through a rear wheel auxiliary steering mechanism. Brakes are respectively provided on the rear wheels so as to brake the rear wheels when the vehicle is stopped.

Finally, U.S. Patent Application Publication No. 2005/209763 discloses a vehicle comprising a parking control apparatus, according to the preamble of claim 1.

### SUMMARY OF THE INVENTION

The present invention has been made in view of the above problems, and it is one object of the present invention to provide a vehicle comprising a parking control apparatus for individually braking, releasing, and driving a plurality of wheels provided in a vehicle such that a vehicle body can be turned, thereby making it easy and convenient to park the vehicle.

Objects of the present invention should not be limited to the aforementioned objects and other unmentioned objects will be clearly understood by those skilled in the art from the following description.

In accordance with an embodiment of the present invention, the above and other objects can be accomplished by the provision of a vehicle comprising a parking control apparatus including the features of claim 1. A vehicle comprising a parking control apparatus includes a plurality of wheels provided in a vehicle body and a processor for performing control such that the wheels are individually braked, released, or driven so as to turn the vehicle body about an axis formed in an overall height direction.

The details of other embodiments are included in the following description and the accompanying drawings.

### BRIEF DESCRIPTION OF THE DRAWINGS

The embodiments will be described in detail with reference to the following drawings in which like reference numerals refer to like elements wherein:
FIGS. 1 and 2 are reference views illustrating conventional parking methods;
FIG. 3 is a reference view illustrating the external appearance of a vehicle according to an embodiment of the present invention;
FIG. 4 is a reference block diagram illustrating the vehicle according to the embodiment of the present invention;
FIGS. 5A to 5C are reference block diagrams illustrating parking control apparatuses according to embodiments of the present invention;
FIGS. 6 to 14 are reference block diagrams illustrating individual control of a plurality of wheels according to embodiments of the present invention;
FIG. 15 is a reference block diagram illustrating the operation of the parking control apparatus performed under the control of a plurality of in-wheel motors in accordance with an embodiment of the present invention;
FIG. 16 is a reference flowchart illustrating the operation of the parking control apparatus performed in an autonomous parking situation in accordance with an embodiment of the present invention;
FIG. 17 is a reference flowchart illustrating a perpendicular parking operation according to an embodiment of the present invention;
FIGS. 18A to 18D are reference views illustrating perpendicular parking operation situations according to embodiments of the present invention;
FIG. 19 is a reference flowchart illustrating a parallel parking operation according to an embodiment of the present invention;
FIGS. 20A to 20F are reference views illustrating parallel parking operation situations according to embodiments of the present invention; and
FIGS. 21A to 21E are reference views illustrating operations of outputting driving operation input guides in accordance with embodiments of the present invention.

### DETAILED DESCRIPTION OF THE PREFERRED EMBODIMENTS

Hereinafter, the embodiments disclosed in the present specification will be described in detail with reference to the accompanying drawings, and the same or similar elements are denoted by the same reference numerals even though they are depicted in different drawings and redundant descriptions thereof will be omitted. In the following description, with respect to constituent elements used in the following description, suffixes "module" and "unit" are used or combined with each other only in consideration of ease in the preparation of the specification, and do not have or serve as different meanings. Accordingly, the suffixes "module" and "unit" may be combined with each other. In addition, in the following description of the embodiments disclosed in the present specification, a detailed description of known functions and configurations incorporated herein will be omitted when it may make the subject matter of the embodiments disclosed in the present specification rather unclear. In addition, the accompanying drawings are provided only for a better understanding of the embodiments disclosed in the present specification and are not intended to limit technical ideas disclosed in the present specification. It will be understood that although the terms "first," "second," etc., may be used herein to describe various components, these components should not be limited by these terms. These terms are only used to distinguish one component from another component.

It will be understood that when a component is referred to as being "connected to" or "coupled to" another component, it may be directly connected to or coupled to another component or intervening components may be present. In contrast, when a component is referred to as being "directly connected to" or "directly coupled to" another component, there are no intervening components present.
As used herein, the singular form is intended to include the plural forms as well, unless the context clearly indicates otherwise.
In the present application, it will be further understood that the terms "comprises", includes," etc. specify the presence of stated features, integers, steps, operations, elements, components, or combinations thereof, but do not preclude the presence or addition of one or more other features, integers, steps, operations, elements, components, or combinations thereof.
A vehicle as described in this specification includes an automobile. Hereinafter, a description will be given based on an automobile. A vehicle as described in this specification may include all of an internal combustion engine vehicle including an engine as a power source, a hybrid vehicle including both an engine and an electric motor as a power source, and an electric vehicle including an electric motor as a power source.

In the following description, "the left side of the vehicle" refers to the left side in the forward driving direction of the vehicle, and "the right side of the vehicle" refers to the right side in the forward driving direction of the vehicle.

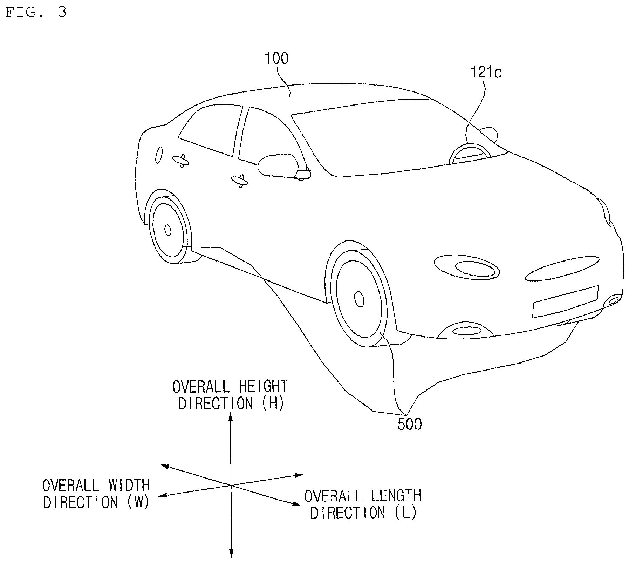

FIG. 3 is a view showing the external appearance of a vehicle according to an embodiment of the present invention.

Referring to FIG. 3, the vehicle, designated by reference numeral 100, may include a plurality of wheels 500, which are rotated by a power source, and a steering input device 121a for controlling the direction of travel of the vehicle 100.

In the following description, the vehicle includes four wheels 500. Alternatively, the vehicle may include more than four wheels 500.

The wheels 500 may be individually controlled. Specifically, the wheels 500 may be individually braked, released, and driven. The release state of the wheels means the state in which the wheels are neither braked nor driven.

The wheels 500 may be differently braked or driven. In some embodiments, the vehicle 100 may differently brake the wheels 500 so as to realize an Electronic Stability Control (ESC) function. Alternatively, the vehicle 100 may differently drive the wheels 500 so as to realize a Traction Control System (TCS) function.

In some embodiments, the vehicle 100 may be an autonomous vehicle. The autonomous vehicle enables bidirectional switching between an autonomous driving mode and a manual mode in response to a user input. When switched to the manual mode, the autonomous vehicle 100 may receive a steering input through a steering input device.

The term "overall length" means the length from the front end to the rear end of the vehicle 100, the term "overall width" means the width of the vehicle 100, and the term "overall height" means the height from the bottom of the wheel to the roof. In the following description, the term "overall length direction L" may mean the reference direction for the measurement of the overall length of the vehicle 100, the term "overall width direction W" may mean the reference direction for the measurement of the overall width of the vehicle 100, and the term "overall height direction H" may mean the reference direction for the measurement of the overall height of the vehicle 100.

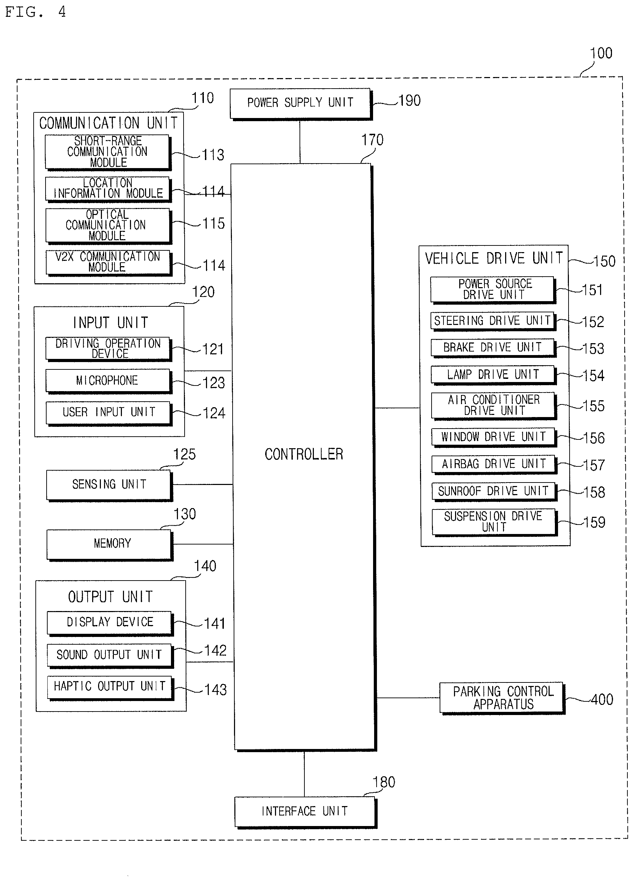

FIG. 4 is a reference block diagram illustrating the vehicle according to the embodiment of the present invention.

Referring to FIG. 4, the vehicle 100 may include a communication unit 110, an input unit 120, a sensing unit 125, a memory 130, an output unit 140, a vehicle drive unit 150, a controller 170, an interface unit 180, a power supply unit 190, and a parking control apparatus 400.

The communication unit 110 may include a short-range communication module 113, a location information module 114, an optical communication module 115, and a V2X communication module 116.

The communication unit 110 may include one or more Radio Frequency (RF) circuits or elements in order to perform communication with other devices.

The short-range communication module 113 may support short-range communication using at least one selected from among Bluetooth™, Radio Frequency IDdentification (RFID), Infrared Data Association (IrDA), Ultra-WideBand (UWB), ZigBee, Near Field Communication (NFC), Wireless-Fidelity (Wi-Fi), Wi-Fi Direct, and Wireless USB (Wireless Universal Serial Bus).

The short-range communication module 113 may form wireless area networks to perform short-range communication between the vehicle 100 and at least one external device. For example, the short-range communication module 113 may exchange data with a mobile terminal of a passenger in a wireless manner. The short-range communication module 113 may receive weather information and road traffic state information (e.g. Transport Protocol Expert Group (TPEG) information) from the mobile terminal. When a user gets into the vehicle 100, the mobile terminal of the user and the vehicle 100 may pair with each other automatically or as the result of the user executing a pairing application.

The location information module 114 is a module for acquiring the location of the vehicle 100. A representative example of the location information module 114 includes a Global Positioning System (GPS) module. For example, when the vehicle 100 utilizes the GPS module, the location of the vehicle 100 may be acquired using signals transmitted from GPS satellites.

Meanwhile, in some embodiments, the location information module 114 may be a component included in the sensing unit 125, rather than a component included in the communication unit 110.

The optical communication module 115 may include a light emitting unit and a light receiving unit.

The light receiving unit may convert light into electrical signals so as to receive information. The light receiving unit may include Photodiodes (PDs) for receiving light. The photo diodes may convert light into electrical signals. For example, the light receiving unit may receive information regarding a preceding vehicle from light emitted from a light source included in the preceding vehicle.

The light emitting unit may include at least one light emitting element for converting electrical signals into light. Here, the light emitting element may be a Light Emitting Diode (LED). The light emitting unit converts electrical signals into light to thereby emit the light. For example, the light emitting unit may externally emit light by flashing the light emitting element at a predetermined frequency. In some embodiments, the light emitting unit may include an array of light emitting elements. In some embodiments, the light emitting unit may be integrated with a lamp provided in the vehicle 100. For example, the light emitting unit may be at least one selected from among a headlight, a taillight, a brake light, a turn signal light, and a sidelight. For example, the optical communication module 115 may exchange data with another vehicle through optical communication.

The V2X communication module 116 is a module for performing wireless communication with a server or another vehicle. The V2X communication module 116 includes a module capable of realizing a protocol for communication between vehicles (V2V) or communication between a vehicle and some infrastructure (V2I). The vehicle 100 may perform wireless communication with an external server or another vehicle via the V2X communication module 116.

The input unit 120 may include a driving operation device 121, a microphone 123, and a user input unit 124.

The driving operation device 121 receives user an input for driving of the vehicle 100. The driving operation device 121 may include a steering input device, a shift input device, an acceleration input device, and a brake input device.

The steering input device receives a user input with regard to the direction of travel of the vehicle 100. The steering input device may take the form of a wheel to enable a steering input through the rotation thereof. In some embodiments, the steering input device may be configured as a touchscreen, a touch pad, or a button.

The shift input device receives an input for selecting one of Park (P), Drive (D), Neutral (N), and Reverse (R) gears of the vehicle 100 from the user. The shift input device may take the form of a lever. In some embodiments, the shift input device may be configured as a touchscreen, a touch pad, or a button.

The acceleration input device receives a user input for the acceleration of the vehicle 100.

The brake input device receives a user input for the deceleration of the vehicle 100. Each of the acceleration input device and the brake input device may take the form of a pedal. In some embodiments, the acceleration input device or the brake input device may be configured as a touchscreen, a touch pad, or a button.

The microphone 123 may process external sound signals into electrical data. The processed data may be utilized in various ways in accordance with the function that the vehicle 100 is performing. The microphone 123 may convert a user voice command into electrical data. The converted electrical data may be transmitted to the controller 170.

Meanwhile, in some embodiments, the microphone 123 may be a component included in the sensing unit 125, rather than a component included in the input unit 120.

The user input unit 124 is configured to receive information from the user. When information is input through the user input unit 124, the controller 170 may control the operation of the vehicle 100 according to the input information. The user input unit 124 may include a touch input unit or a mechanical input unit. In some embodiments, the user input unit 124 may be located in the region of the steering wheel. In this case, the driver may operate the user input unit 124 with the fingers while gripping the steering wheel.

The sensing unit 125 senses various situations in the vehicle 100 or situations outside the vehicle 100. To this end, the sensing unit 125 may include a collision sensor, a wheel sensor, a speed sensor, a gradient sensor, a weight sensor, a heading sensor, a yaw sensor, a gyro sensor, a position module, a vehicle forward/reverse movement sensor, a battery sensor, a fuel sensor, a tire sensor, a steering sensor based on the rotation of the steering wheel, an in-vehicle temperature sensor, an in-vehicle humidity sensor, a ultrasonic sensor, an illumination sensor, an accelerator pedal position sensor, and a brake pedal position sensor.

The sensing unit 125 may acquire sensing signals with regard to, for example, vehicle collision information, vehicle driving direction information, vehicle location information (GPS information), vehicle angle information, vehicle speed information, vehicle acceleration information, vehicle tilt information, vehicle forward/reverse movement information, battery information, fuel information, tire information, vehicle lamp information, in-vehicle temperature information, in-vehicle humidity information, steering-wheel rotation angle information, out-of-vehicle illumination information, information about pressure applied to an accelerator pedal, and information about pressure applied to a brake pedal.

The sensing unit 125 may further include, for example, an accelerator pedal sensor, a pressure sensor, an engine speed sensor, an Air Flow-rate Sensor (AFS), an Air Temperature Sensor (ATS), a Water Temperature Sensor (WTS), a Throttle Position Sensor (TPS), a Top Dead Center (TDC) sensor, and a Crank Angle Sensor (CAS).

Meanwhile, the location information module 114 may be arranged as a sub-component of the sensing unit 125.

The sensing unit 125 may include an object sensing unit capable of sensing objects around the vehicle. Here, the object sensing unit may include a camera module, Radar, Lidar, or an ultrasonic sensor. In this case, the sensing unit 125 may sense a front object located to the front of the vehicle or a rear object located to the rear of the vehicle using the camera module, the Radar, the Lidar, or the ultrasonic sensor.

Meanwhile, in some embodiments, the object sensing unit may be sorted as a constituent component of the parking control apparatus 400.

The memory 130 is electrically connected to the controller 170. The memory 130 may store basic data for each unit, control data for the operational control of each unit, and input/output data. The memory 130 may be any of various hardware storage devices, such as a ROM, a RAM, an EPROM, a flash drive, and a hard drive. The memory 130 may store various data for the overall operation of the vehicle 100, such as programs for the processing or control of the controller 170.

The output unit 140 is configured to output information processed in the controller 170. The output unit 140 may include a display device 141, a sound output unit 142, and a haptic output unit 143.

The display device 141 may display various graphic objects. For example, the display device 141 may display vehicle-associated information. Here, the vehicle-associated information may include vehicle control information for the direct control of the vehicle or driver assistance information to guide the driver's vehicle driving. In addition, the vehicle associated information may include vehicle state information indicating the current state of the vehicle or vehicle traveling information regarding the traveling of the vehicle.

The display device 141 may display parking control information or parking guide information.

The display device 141 may include at least one selected from among a Liquid Crystal Display (LCD), a Thin Film Transistor LCD (TFT LCD), an Organic Light Emitting Diode (OLED), a flexible display, a three-dimensional display (3D display), and an e-ink display.

The display device 141 may form an inter-layer structure together with a touch sensor, or may be integrally formed with the touch sensor to implement a touchscreen. The touchscreen may function as the user input unit 124, which provides an input interface between the vehicle 100 and the user, and may also function to provide an output interface between the vehicle 100 and the user. In this case, the display device 141 may include a touch sensor for sensing a touch on the display device 141 so as to receive a control command in a touch manner. When a touch is input to the display device 141 as described above, the touch sensor may sense the touch, and the controller 170 may generate a control command corresponding to the touch. The content input in a touch manner may be characters or numbers, or may be, for example, instructions in various modes or menu items that may be designated.

Meanwhile, the display device 141 may include a cluster for allowing the driver to check vehicle state information or vehicle traveling information while driving the vehicle. The cluster may be located on a dashboard. In this case, the driver may check information displayed on the cluster while looking forward.

Meanwhile, in some embodiments, the display device 141 may be implemented as a Head Up display (HUD). When the display device 141 is implemented as a HUD, information may be output through a transparent display provided on the front windshield. Alternatively, the display device 141 may include a projector module in order to output information through an image projected on the front windshield.

Meanwhile, in some embodiments, the display device 141 may include a transparent display. In this case, the transparent display may be attached to the front windshield.

The transparent display may display a predetermined screen with a predetermined transparency. In order to achieve the transparency, the transparent display may include at least one selected from among a transparent Thin Film Electroluminescent (TFEL) display, an Organic Light Emitting Diode (OLED) display, a transparent Liquid Crystal Display (LCD), a transmissive transparent display, and a transparent LED display. The transparency of the transparent display may be adjustable.

In some embodiments, the display device 141 may function as a navigation device.

The sound output unit 142 converts electrical signals from the controller 170 into audio signals and outputs the audio signals. To this end, the sound output unit 142 may include, for example, a speaker. The sound output unit 142 may output sound corresponding to the operation of the user input unit 124.

The haptic output unit 143 generates a tactile output. For example, the haptic output unit 143 may operate to vibrate a steering wheel, a safety belt, or a seat so as to allow the user to recognize the output thereof.

The vehicle drive unit 150 may control the operation of various devices of the vehicle. The vehicle drive unit 150 may include a power source drive unit 151, a steering drive unit 152, a brake drive unit 153, a lamp drive unit 154, an air conditioner drive unit 155, a window drive unit 156, an airbag drive unit 157, a sunroof drive unit 158, and a suspension drive unit 159.

The power source drive unit 151 may perform electronic control of a power source inside the vehicle 100.

For example, in the case in which a fossil fuel based engine (not shown) is the power source, the power source drive unit 151 may perform electronic control of the engine. As such, the power source drive unit 151 may control, for example, the output torque of the engine. In the case in which the power source drive unit 151 is such an engine, the power source drive unit 151 may limit the speed of the vehicle by controlling the output torque of the engine under the control of the controller 170.

In another example, when an electric motor (not shown) is the power source, the power source drive unit 151 may perform control of the motor. As such, the power source drive unit 151 may control, for example, the RPM and torque of the motor.

The steering drive unit 152 may perform electronic control of a steering apparatus inside the vehicle 100. As such, the steering drive unit 152 may change the direction of travel of the vehicle 100.

The brake drive unit 153 may perform electronic control for a brake apparatus (not shown) inside the vehicle 100. For example, the brake drive unit 153 may reduce the speed of the vehicle 100 by controlling the operation of brakes located at wheels. In another example, the brake drive unit 153 may adjust the direction of travel of the vehicle 100 leftward or rightward by differently performing the operation of respective brakes located at left and right wheels.

The lamp drive unit 154 may turn at least one lamp arranged inside and outside the vehicle on or off. In addition, the lamp drive unit 154 may control, for example, the intensity and radiation direction of the light from the lamp. For example, the lamp drive unit 154 may perform control for a turn-signal lamp or a brake lamp.

The air conditioner drive unit 155 may perform electronic control of an air conditioner (not shown) inside the vehicle 100. For example, when the interior temperature of the vehicle is high, the air conditioner drive unit 155 may operate the air conditioner so as to supply cool air to the interior of the vehicle.

The window drive unit 156 may perform electronic control of a window apparatus inside the vehicle 100. For example, the window drive unit 156 may control the opening or closing of left and right windows of the vehicle.

The airbag drive unit 157 may perform electronic control of an airbag apparatus inside the vehicle 100. For example, the airbag drive unit 157 may perform control such that an airbag is deployed in a dangerous situation.

The sunroof drive unit 158 may perform electronic control of a sunroof apparatus (not shown) inside the vehicle 100. For example, the sunroof drive unit 158 may control the opening or closing of a sunroof.

The suspension drive unit 159 may perform electronic control of a suspension apparatus (not shown) inside the vehicle 100. For example, when the road surface is uneven, the suspension drive unit 159 may control the suspension apparatus in order to reduce the vibration of the vehicle 100.

Meanwhile, in some embodiments, the vehicle drive unit 150 may include a chassis drive unit. Here, the chassis drive unit may include the steering drive unit 152, the brake drive unit 153, and the suspension drive unit 159.

Meanwhile, in some embodiments, the vehicle drive unit 150 may include a gearbox drive unit. The gearbox drive unit may perform electronic control of a gearbox. The gearbox drive unit may control the states (for example, Park (P), Reverse (R), Neutral (N), and Drive (D) states) of the gearbox.

The controller 170 may control the overall operation of each unit inside the vehicle 100. The controller 170 may be referred to as an Electronic Control Unit (ECU).

The controller 170 may be implemented in a hardware manner using at least one selected from among Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, and electric units for the implementation of other functions.

The interface unit 180 may serve as a passage for various kinds of external devices that are connected to the vehicle 100. For example, the interface unit 180 may have a port that is connectable to a mobile terminal and may be connected to the mobile terminal via the port. In this case, the interface unit 180 may exchange data with the mobile terminal.

Meanwhile, the interface unit 180 may serve as a passage for the supply of electrical energy to a mobile terminal connected thereto. When the mobile terminal is electrically connected to the interface unit 180, the interface unit 180 may provide electrical energy, supplied from the power supply unit 190, to the mobile terminal under the control of the controller 170.

The power supply unit 190 may supply power required to operate the respective components under the control of the controller 170. In particular, the power supply unit 190 may receive power from, for example, a battery (not shown) inside the vehicle 100.

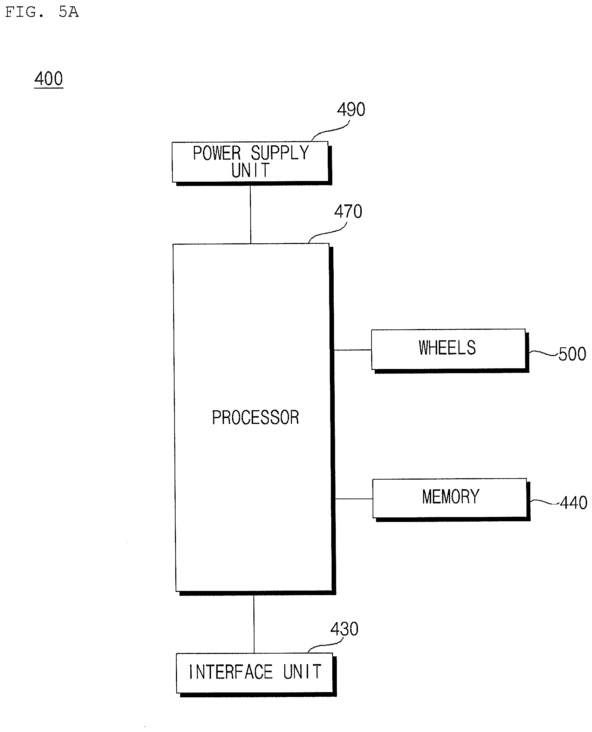

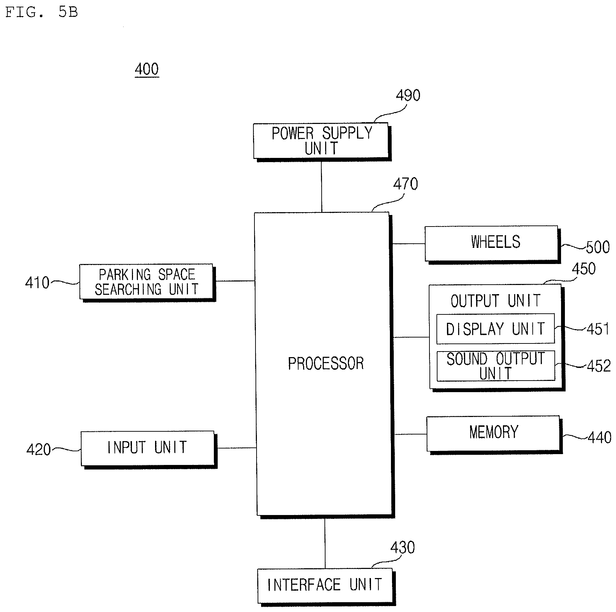

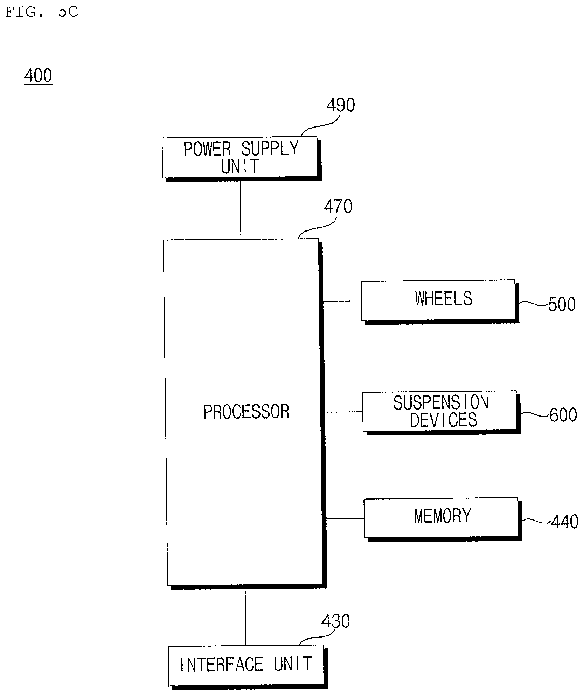

The parking control apparatus 400 may control parking of the vehicle 100. The parking control apparatus 400 will be described in more detail with reference to FIG. 5 and subsequent figures.

FIGS. 5A to 5C are reference block diagrams illustrating parking control apparatuses according to embodiments of the present invention.

Referring to FIG. 5A, the parking control apparatus 400 may include an interface unit 430, a memory 440, a processor 470, a plurality of wheels 500, and a power supply unit 490.

The interface unit 430 may receive various kinds of signals, information, or data. The interface unit 430 may transmit signals, information, or data, processed or produced in the processor 470, to external devices.

To this end, the interface unit 430 may perform data communication with, for example, the controller 170, the display device 141, the sensing unit 125, and the vehicle drive unit 150, which are provided inside the vehicle 100, in a wired or wireless communication manner.

The interface unit 430 may receive sensor information from the controller 170 or the sensing unit 125.

Here, the sensor information may include at least one selected from among vehicle travel direction information, vehicle location information (GPS information), vehicle angle information, vehicle speed information, vehicle steering information, vehicle acceleration information, vehicle tilt information, vehicle forward/reverse movement information, battery information, fuel information, tire information, vehicle lamp information (e.g. turn-signal information), in-vehicle temperature information, in-vehicle humidity information, and information regarding whether it is raining.

The sensor information may be acquired from, for example, a heading sensor, a yaw sensor, a gyro sensor, a position module, a vehicle forward/reverse movement sensor, a wheel sensor, a vehicle speed sensor, a steering angle sensor, a vehicle body gradient sensor, a battery sensor, a fuel sensor, a tire sensor, a steering sensor based on the rotation of a steering wheel, an in-vehicle temperature sensor, an in-vehicle humidity sensor, and a rain sensor. Meanwhile, the position module may include a GPS module for receiving GPS information.

The interface unit 430 may receive navigation information through data communication with the controller 170, the display device 141, or a separate navigation apparatus. Here, the navigation information may include set destination information, destination-based routing information, map information related to driving of the vehicle, and information about the vehicle's current location. Meanwhile, the navigation information may include information regarding the vehicle's location on a road.

The memory 440 may store various data for the overall operation of the parking control apparatus 400, such as programs for the processing or control of the processor 470.

The memory 440 may be any one of various hardware storage devices, such as a ROM, a RAM, an EPROM, a flash drive, and a hard drive. In some embodiments, the memory 440 may be arranged as a sub-component of the processor 470.

The processor 470 may be electrically connected to each unit of the parking control apparatus 400.

The processor 470 may control the overall operation of each unit included in the parking control apparatus 400.

The processor 470 may individually control the wheels 500. Specifically, the processor 470 may individually brake the wheels 500. The processor 470 may individually release the wheels 500. The processor 470 may individually drive the wheels 500.

The processor 470 may individually brake, release, or drive the wheels 500 so as to turn the vehicle body about the axis formed in the overall height direction.

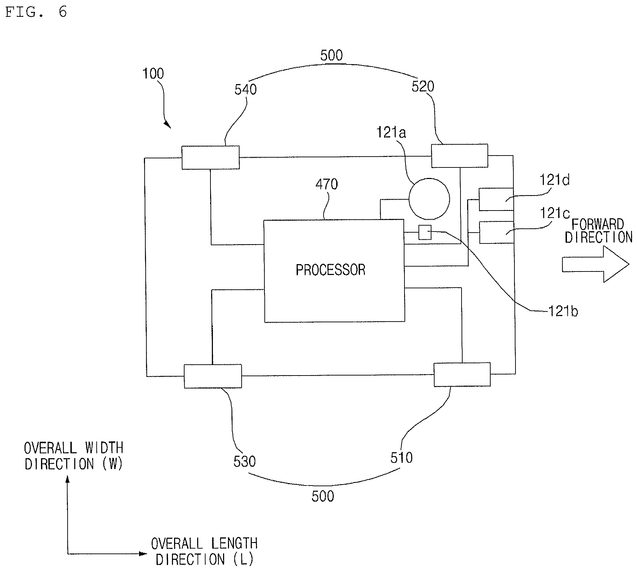

Individual control of the wheels performed by the processor 470 will be described in more detail with reference to FIGS. 6 to 14.

The processor 470 may be implemented using at least one selected from among Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, and electric units for the implementation of other functions.

The wheels 500 may be provided at the vehicle body of the vehicle 100. The wheels 500 may be controlled according to an electrical signal provided from the processor 470. The wheels 500 may be connected to axle shafts so as to support the vehicle body.

The wheels 500 include front wheels 510 and 520 and rear wheels 530 and 540.

The front wheels 510 and 520 may be connected to a front axle shaft. The front axle shaft may be a driving axle shaft for transmitting power or a movable axle shaft for supporting the weight of the vehicle. A differential may be provided at the front axle shaft. The differential provided at the front axle shaft may differently control the driving force transmitted to the front wheels 510 and 520. The differential may be electrically connected to the processor 470 such that the differential can be controlled by the processor 470.

The rear wheels 530 and 540 may be connected to a rear axle shaft. The rear axle shaft may be a driving axle shaft for transmitting power or a movable axle shaft for supporting the weight of the vehicle. A differential may be provided at the rear axle shaft. The differential provided at the rear axle shaft may differently control the driving force transmitted to the rear wheels 530 and 540. The differential may be electrically connected to the processor 470 such that the differential can be controlled by the processor 470.

The power supply unit 490 may supply power required to operate the respective components under the control of the processor 470. In particular, the power supply unit 490 may receive power from a battery inside the vehicle.

Referring to FIG. 5B, the parking control apparatus of FIG. 5B is different from the parking control apparatus of FIG. 5A in that the parking control apparatus of FIG. 5B further includes a parking space searching unit 410, an input unit 420, and an output unit 450. The parking control apparatus 400 may separately include the parking space searching unit 410, the input unit 420, and the output unit 450. Alternatively, the parking control apparatus 400 may include an assembly consisting of the parking space searching unit 410, the input unit 420, and the output unit 450.

The description of the parking control apparatus of FIG. 5A may be applied to the parking control apparatus of FIG. 5B. In the following, the differences therebetween will be described.

The parking space searching unit 410 may sense a space that is sufficiently large to park the vehicle 100. The parking space searching unit 410 may separately include a camera module and an ultrasonic sensor. Alternatively, the parking space searching unit 410 may include an assembly consisting of the camera module and the ultrasonic sensor.

The camera module may detect a parking space based on an acquired image. For example, the camera module may detect parking lines in the image, thereby detecting a parking space. For example, the camera module may detect an empty space between objects in the image, thereby detecting a parking space.

The ultrasonic sensor may detect an empty space between objects based on reflected ultrasonic waves received by the ultrasonic sensor after ultrasonic waves transmitted from the ultrasonic sensor are reflected by the objects, thereby detecting a parking space.

The processor 470 may determine whether the vehicle can be parked in the detected parking space based on information acquired by the parking space searching unit 410. The processor 470 may determine a parking mode based on the sensed parking space information.

The input unit 420 may receive a user input. The input unit 420 may include a mechanical input device, a touch input device, a voice input device, or a wireless input device.

The mechanical input device may include, for example, a button, a lever, a jog wheel, or a switch.

The touch input device may include at least one touch sensor. The touch input device may be configured as a touchscreen.

The voice input device may include a microphone for converting a user's voice into electrical signals.

The wireless input device may receive a wireless user input from outside the vehicle 100. The user input may be received from a smart key or a mobile terminal held by a user.

The processor 470 may individually control the wheels 500 based on the user input received through the input unit.

For example, the processor 470 may individually control the wheels 500 based on a wireless user input from outside the vehicle 100.

Meanwhile, the driving operation device 121 may be arranged as a sub-component of the parking control apparatus 400. For example, the steering input device (for example, a steering wheel), the shift input device (for example, a shift lever), the acceleration input device (for example, an accelerator pedal), or the brake input device (for example, a brake pedal) may be arranged as a sub-component of the parking control apparatus 400.

The output unit 450 may output data or information processed in the processor 470 under the control of the processor 470.

The output unit 450 may include a display unit 451 and a sound output unit 452.

The display unit 451 may display information processed in the processor 470. The display unit 451 may display an image related to the operation of the parking control apparatus 400. For the display of the image, the display unit 451 may include a cluster or a Head Up Display (HUD) provided on the inner front surface of the vehicle 100. Meanwhile, in the case in which the display unit 451 is the HUD, the display unit 451 may include a projector module for projecting an image on the front windshield or a combiner of the vehicle 100.

The sound output unit 452 may output sound to the outside based on an audio signal processed in the processor 470. To this end, the sound output unit 452 may include at least one speaker.

The processor 470 may perform control such that a point corresponding to at least one of the wheels is output through the output unit 450 so as to turn the vehicle body.

For example, the processor 470 may perform control such that information about a first point corresponding to the first rear wheel 540, which is one of the wheels 500, is output through the output unit 450.

For example, the display unit 451 may display the information about the first point. For example, the display 451 may display the first point on the HUD in the form of augmented reality (AR).

For example, the sound output unit 452 may output the information about the first point in the form of a voice. The sound output unit 452 may output information about the distance between the first rear wheel 540 and the first point in the form of a sound. The sound output unit 452 may output information about the state in which the first rear wheel 540 is located at the first point in the form of a sound.

Referring to FIG. 5C, the parking control apparatus of FIG. 5C is different from the parking control apparatus of FIG. 5A in that the parking control apparatus of FIG. 5C controls a plurality of suspension devices 600. In addition, the parking control apparatus of FIG. 5C is different from the parking control apparatus of FIG. 5B in that the parking control apparatus of FIG. 5C controls a plurality of suspension devices 600.

The description of the parking control apparatus of FIG. 5A may be applied to the parking control apparatus of FIG. 5C. In addition, the description of the parking control apparatus of FIG. 5B may be applied to the parking control apparatus of FIG. 5C. In the following, the differences there between will be described.

The parking control apparatus 400 may include a plurality of suspension devices 600.

The suspension devices 600 may be disposed so as to correspond to the respective wheels 500. The suspension devices 600 may be disposed between the vehicle body and the front axle shaft and between the vehicle body and the rear axle shaft. Alternatively, the suspension devices 600 may be disposed between the vehicle body and the wheels 500.

Each of the suspension devices 600 may be controlled by the processor 470.

The processor 470 controls the heights of the suspension devices 600. For example, when the vehicle body is turned about the first wheel, which is one of the wheels 500, the processor 470 performs control such that the height of the first suspension corresponding to the first wheel is lower than the heights of the other suspension devices. As a result, the turning radius of the vehicle body is further reduced, thereby reducing the space necessary to park the vehicle and minimizing the resistance applied to the vehicle when the vehicle body is turned.

FIGS. 6 to 14 are reference block diagrams illustrating operations of individually controlling a plurality of wheels in accordance with an embodiment of the present invention.

The wheels 500 include a first front wheel 510, a second front wheel 520, a first rear wheel 530, and a second rear wheel 540. Meanwhile, the first front wheel 510 and the first rear wheel 530 may be referred to as right wheels. The second front wheel 520 and the second rear wheel 540 may be referred to as left wheels.

The vehicle 100 may be classified as a front wheel drive vehicle, a four wheel drive vehicle, or a rear wheel drive vehicle. The vehicle 100 according to the embodiment of the present invention may be any one selected from among the front wheel drive vehicle, the four wheel drive vehicle, and the rear wheel drive vehicle.

The processor 470 may be electrically connected to the driving operation device 121. Specifically, the processor 470 may be electrically connected to the steering input device (for example, a steering wheel 121a), the shift input device (for example, a shift lever 121b), the acceleration input device (for example, an accelerator pedal 121c), or the brake input device (for example, a brake pedal 121d). For example, in a manual parking mode, the processor 470 may perform parking control based on a driving operation input received through the driving operation device 121.

The processor 470 may individually control the wheels 500 based on a driving operation input received through the driving operation device 121. For example, when a driving operation input is received through the driving operation device 121 in a parking mode state, the processor 470 may individually control the wheels 500 to perform parking control.

When a user input for entry into a parking mode is received through the input unit 420, the processor 470 may enter the parking mode. Alternatively, when a parking situation is sensed by the sensing unit 125 and information about the parking situation is received through the interface unit 430, the processor 470 may enter the parking mode. The parking situation may be sensed by recognizing a parking sign, parking lines, other parked vehicles, etc. using the camera module.

Referring to FIG. 6, the processor 470 may individually control the wheels 510, 520, 530, and 540.

The processor 470 may individually brake the wheels 510, 520, 530, and 540. For example, the processor 470 may provide individual electrical signals to braking devices provided in the respective wheels 510, 520, 530, and 540 in order to individually brake the wheels 510, 520, 530, and 540. The operation of individually braking the wheels 510, 520, 530, and 540 may be referred to as differential braking.

The processor 470 may individually release the wheels 510, 520, 530, and 540. The processor 470 may refrain from braking or driving at least one of the wheels in order to individually release the wheels 510, 520, 530, and 540.

The processor 470 may individually drive the wheels 510, 520, 530, and 540. For example, the processor 470 may provide individual electrical signals to the differential provided at the front axle shaft and/or the rear axle shaft in order to individually drive the wheels 510, 520, 530, and 540. For example, the processor 470 may provide individual electrical signals to a plurality of in-wheel motors disposed so as to correspond to the wheels 500 in order to individually drive the wheels 510, 520, 530, and 540. The operation of individually driving the wheels 510, 520, 530, and 540 may be referred to as differential driving.

The processor 470 may individually control the wheels so as to turn the vehicle body about the axis formed in the overall height direction.

The axis formed in the overall height direction may be the axis formed in the overall height direction based on a point at which one of the wheels 500 is located.

For example, the processor 470 may individually control the wheels 500 so as to turn the vehicle body about the first front wheel 510, the second front wheel 520, the first rear wheel 530, or the second rear wheel 540 as the axis.

In the following description, the processor 470 controls the first rear wheel 530 so as to turn the vehicle body about the first rear wheel 530 as the axis. Turning the vehicle body about the first front wheel 510, the second front wheel 520, or the second rear wheel 540 as the axis is obvious to those skilled in the art to which the present invention pertains.

The axis formed in the overall height direction may be the axis formed in the overall height direction based on predetermined point outside the vehicle 100.

The processor 470 may perform control such that at least one of the wheels 500 is braked and may perform control such that at least one of the remaining wheels, excluding the braked wheel, is driven so as to turn the vehicle body.

Meanwhile, the processor 470 may perform control such that those among the wheels 500 that are connected to the steering input device 121a are directed to the left or the right in the forward direction of the vehicle 100.

The wheels connected to the steering input device 121a may be the first front wheel 510 and the second front wheel 520. In this case, the first front wheel 510 and the second front wheel 520 may be referred to as steering front wheels.

For example, the processor 470 may perform control such that those among the wheels 500 that are connected to the steering input device 121a are directed to the left in the forward direction of the vehicle 100, whereby the moving direction of the vehicle 100 is adjusted to the left in the forward direction of the vehicle 100.

For example, the processor 470 may perform control such that those among the wheels 500 that are connected to the steering input device 121a are directed to the right in the forward direction of the vehicle 100, whereby the moving direction of the vehicle 100 is adjusted to the right in the forward direction of the vehicle 100.

In the state in which the wheels connected to the steering input device 121a are directed to the left or the right in the forward direction of the vehicle 100, the processor 470 may individually control the wheels 500 so as to turn the vehicle body. As the result of differential braking or differential driving, performed together with steering, therefore, it is possible to turn the vehicle body even in a small space.

In the state in which the vehicle body starts to be turned according to the individual control of the wheels 500, the processor 470 may perform control such that the wheels connected to the steering input device 121a are directed to the left or the right in the forward direction of the vehicle 100.

The processor 470 may perform control such that the wheels connected to the steering input device 121a are gradually directed in the forward direction of the vehicle 100 in a simultaneous manner when individually braking, releasing, or driving the wheels 500.

For example, the processor 470 may individually brake, release, or drive the wheels 500 so as to turn the vehicle body, and, at the same time, may perform control such that the steering applied to the wheels connected to the steering input device 121a is released. As a result, it is possible to prevent the vehicle from turning abruptly, thereby improving the driving comfort of passengers.

The processor 470 may perform control such that the wheels connected to the steering input device 121a are gradually directed in the forward direction of the vehicle 100 in a simultaneous manner when driving at least one of the wheels 500.

For example, the processor 470 may drive at least one of the wheels 500 so as to move the vehicle 100 in the forward direction or in the reverse direction, and, at the same time, may perform control such that the wheels connected to the steering input device 121a are gradually directed in the forward direction of the vehicle 100.

Hereinafter, the control of the processor 470 in the case in which the vehicle is a front wheel drive vehicle, a four wheel drive vehicle, or a rear wheel drive vehicle will be described in detail.

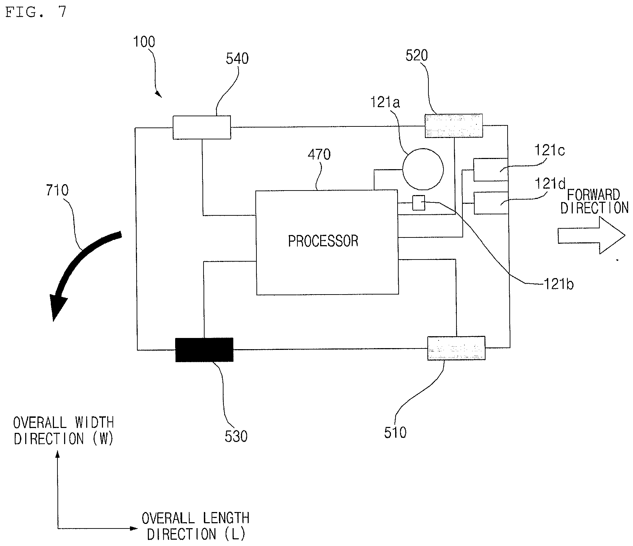

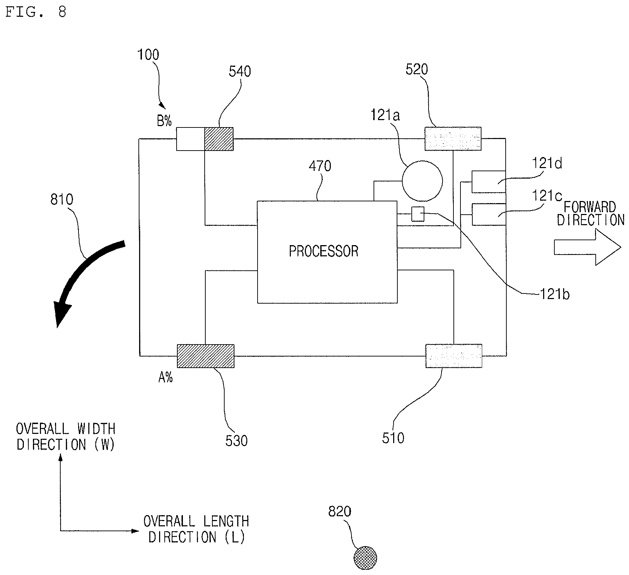

FIGS. 7 and 8 are reference views illustrating the operation of the parking control apparatus performed in accordance with an embodiment of the present invention in the case in which the vehicle 100 is a front wheel drive vehicle.

Referring to FIGS. 7 and 8, the vehicle 100 may be a front wheel drive vehicle. In the case in which the vehicle 100 is such a front wheel drive vehicle, the front axle shaft may be a driving axle shaft, and the rear axle shaft may be a movable axle shaft. A differential may be provided at the front axle shaft. Power from the power source may be supplied only to the front wheels 510 and 520 via the front axle shaft.

The processor 470 may drive the front wheels 510 and 520 together. For example, the processor 470 may drive the front wheels 510 and 520 at the same ratio. Alternatively, the processor 470 may drive the front wheels 510 and 520 at different ratios.

The processor 470 may simultaneously brake the front wheels 510 and 520 and the rear wheels 530 and 540. Alternatively, the processor 470 may individually brake the front wheels 510 and 520 and the rear wheels 530 and 540.

As illustrated in FIG. 7, the processor 470 may brake the first rear wheel 530 so as to fix the first rear wheel 530, may release the second rear wheel 540, and may drive the first front wheel 510 and the second front wheel 520, so as to turn the vehicle body (710).

The processor 470 may brake the first rear wheel 530 so as to fix the first rear wheel 530. For example, the processor 470 may fully brake the first rear wheel 530 so as to fix the first rear wheel 530 such that the first rear wheel 530 cannot be rotated in the forward direction or in the reverse direction.

The processor 470 may release the second rear wheel 540.

The processor 470 may drive the first front wheel 510 and the second front wheel 520. For example, the processor 470 may drive the first front wheel 510 and the second front wheel 520 so as to move the vehicle 100 in the reverse direction.

In the case in which the first front wheel 510 and the second front wheel 520 are driven in the reverse direction in the state in which the first rear wheel 530 is fixed and the second rear wheel 540 is released, the vehicle body may be turned about the first rear wheel 530 as the axis.

As a result, perpendicular parking or parallel parking may be easily and rapidly performed in a small space.

As illustrated in FIG. 8, the processor 470 may brake the first rear wheel 530 and the second rear wheel 540 at different ratios, and may drive the first front wheel 510 and the second front wheel 520, so as to turn the vehicle body (810).

The processor 470 may brake the first rear wheel 530 and the second rear wheel 540 at different ratios. For example, the processor 470 may brake the first rear wheel 530 using a larger force than when braking the second rear wheel 540.

For example, the processor 470 may perform control such that different braking forces are applied to the first rear wheel 530 and the second rear wheel 540. The processor 470 may brake the first rear wheel 530 using A% of the full braking force. The processor 470 may brake the second rear wheel 540 using B% of the full braking force. Here, A may be a number greater than B.

The processor 470 may drive the first front wheel 510 and the second front wheel 520. For example, the processor 470 may drive the first front wheel 510 and the second front wheel 520 so as to move the vehicle 100 in the reverse direction.

In the case in which the first front wheel 510 and the second front wheel 520 are driven in the reverse direction in the state in which the first rear wheel 530 and the second rear wheel 540 are braked at different ratios, the vehicle body may be turned about an axis 820 formed outside the vehicle 100. The distance from the first rear wheel 530 to the axis 820 is shorter than the distance from the second rear wheel 540 to the axis 820. The turning radius of the first rear wheel 530 is shorter than the turning radius of the second rear wheel 540.

Because the braking force applied to the first rear wheel 530 is greater than the braking force applied to the second rear wheel 540, the movement distance of the second rear wheel 540 is greater than the movement distance of the first rear wheel 530. The rotational displacement of the first rear wheel 530 about the axis 820 as the center is shorter than the rotational displacement of the second rear wheel 540 about the axis 820 as the center. Consequently, the vehicle body may be turned about the axis 820.

As a result, perpendicular parking or parallel parking may be easily and rapidly performed in a small space.

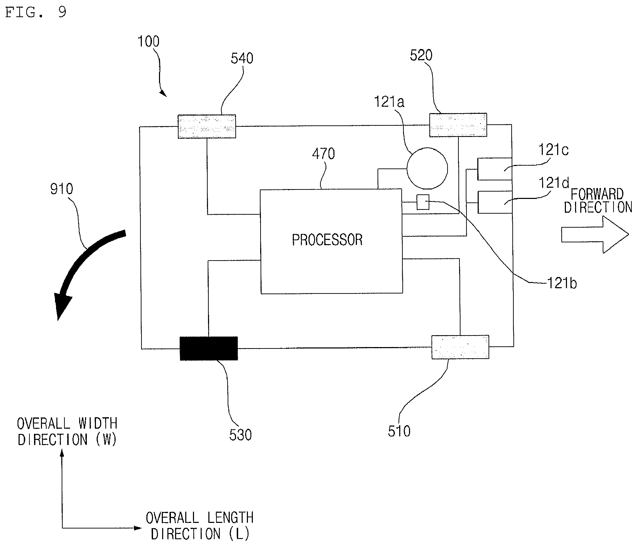

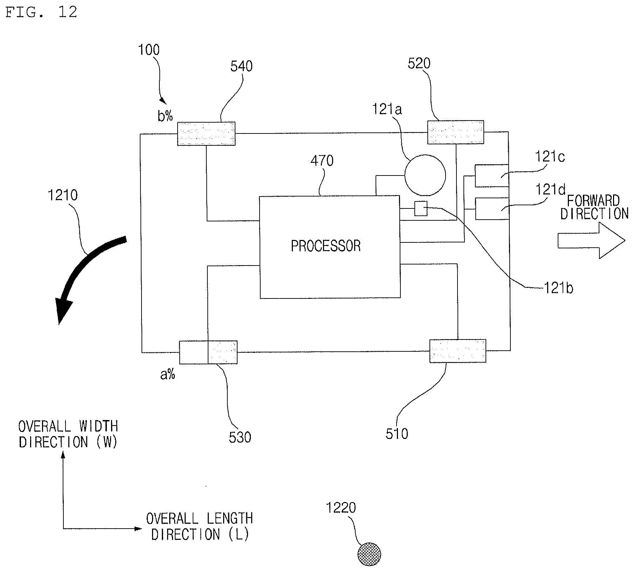

FIGS. 9 and 12 are reference views illustrating the operation of the parking control apparatus performed in accordance with an embodiment of the present invention in the case in which the vehicle 100 is a four wheel drive vehicle.

Referring to FIGS. 9 and 12, the vehicle 100 may be a four wheel drive vehicle. In the case in which the vehicle 100 is such a four wheel drive vehicle, the front axle shaft and the rear axle shaft may be driving axle shafts. A differential may be provided at each of the front axle shaft and the rear axle shaft. Power from the power source may be supplied to the front wheels 510 and 520 via the front axle shaft, and may be supplied to the rear wheels 530 and 540 via the rear axle shaft.

The processor 470 may drive the front wheels 510 and 520 and the rear wheels 530 and 540 at the same ratio. Alternatively, the processor 470 may drive the front wheels 510 and 520 and the rear wheels 530 and 540 at different ratios.

The processor 470 may simultaneously brake the front wheels 510 and 520 and the rear wheels 530 and 540. Alternatively, the processor 470 may individually brake the front wheels 510 and 520 and the rear wheels 530 and 540.

As illustrated in FIG. 9, the processor 470 may brake the first rear wheel 530 so as to fix the first rear wheel 530, and may drive the first front wheel 510, the second front wheel 520, and the second rear wheel 540, so as to turn the vehicle body (910).

The processor 470 may brake the first rear wheel 530 so as to fix the first rear wheel 530. For example, the processor 470 may fully brake the first rear wheel 530 so as to fix the first rear wheel 530 such that the first rear wheel 530 cannot be rotated in the forward direction or in the reverse direction.

The processor 470 may drive the first front wheel 510, the second front wheel 520, and the second rear wheel 540. For example, the processor 470 may drive the first front wheel 510, the second front wheel 520, and the second rear wheel 540 so as to move the vehicle 100 in the reverse direction.

In the case in which the first front wheel 510, the second front wheel 520, and the second rear wheel 540 are driven in the reverse direction in the state in which the first rear wheel 530 is fixed, the vehicle body may be turned about the first rear wheel 530 as the axis.

As a result, perpendicular parking or parallel parking may be easily and rapidly performed in a small space.

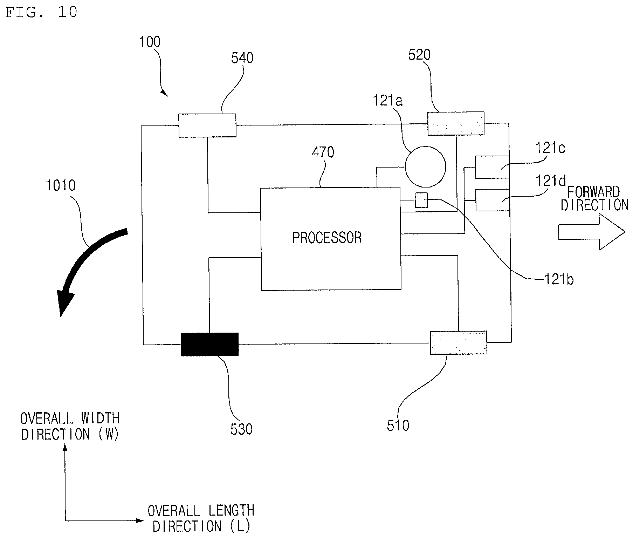

As illustrated in FIG. 10, the processor 470 may brake the first rear wheel 530 so as to fix the first rear wheel 530, may release the second rear wheel 540, and may drive the first front wheel 510 and the second front wheel 520, so as to turn the vehicle body (see reference numeral 1010).

The processor 470 may brake the first rear wheel 530 so as to fix the first rear wheel 530. For example, the processor 470 may fully brake the first rear wheel 530 so as to fix the first rear wheel 530 such that the first rear wheel 530 cannot be rotated in the forward direction or in the reverse direction.

The processor 470 may release the second rear wheel 540.

The processor 470 may drive the first front wheel 510 and the second front wheel 520. For example, the processor 470 may drive the first front wheel 510 and the second front wheel 520 so as to move the vehicle 100 in the reverse direction.

In the case in which the first front wheel 510 and the second front wheel 520 are driven in the reverse direction in the state in which the first rear wheel 530 is fixed and the second rear wheel 540 is released, the vehicle body may be turned about the first rear wheel 530 as the axis.

As a result, perpendicular parking or parallel parking may be easily and rapidly performed in a small space.

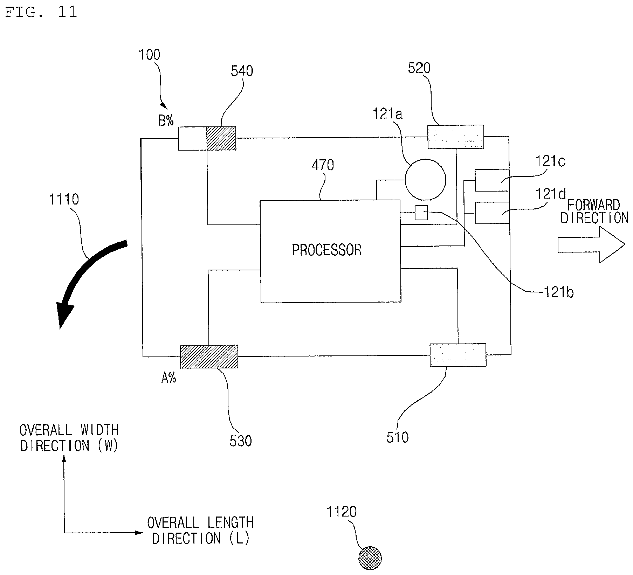

As illustrated in FIG. 11, the processor 470 may brake the first rear wheel 530 and the second rear wheel 540 at different ratios, and may drive the first front wheel 510 and the second front wheel 520, so as to turn the vehicle body (see reference numeral 1110).

The processor 470 may brake the first rear wheel 530 and the second rear wheel 540 at different ratios. The processor 470 may brake the first rear wheel 530 using a larger force than when braking the second rear wheel 540.

For example, the processor 470 may perform control such that different braking forces are applied to the first rear wheel 530 and the second rear wheel 540. The processor 470 may brake the first rear wheel 530 using A% of the full braking force. The processor 470 may brake the second rear wheel 540 using B% of the full braking force. Here, A may be a number greater than B.

The processor 470 may drive the first front wheel 510 and the second front wheel 520. For example, the processor 470 may drive the first front wheel 510 and the second front wheel 520 so as to move the vehicle 100 in the reverse direction.

In the case in which the first front wheel 510 and the second front wheel 520 are driven in the reverse direction in the state in which the first rear wheel 530 and the second rear wheel 540 are braked at different ratios, the vehicle body may be turned about an axis 1120 formed outside the vehicle 100. The distance from the first rear wheel 530 to the axis 1120 is shorter than the distance from the second rear wheel 540 to the axis 1120. The turning radius of the first rear wheel 530 is shorter than the turning radius of the second rear wheel 540.

Because the braking force applied to the first rear wheel 530 is greater than the braking force applied to the second rear wheel 540, the movement distance of the second rear wheel 540 is greater than the movement distance of the first rear wheel 530. The rotational displacement of the first rear wheel 530 about the axis 1120 as the center is shorter than the rotational displacement of the second rear wheel 540 about the axis 1120 as the center. Consequently, the vehicle body may be turned about the axis 1120.

As a result, perpendicular parking or parallel parking may be easily and rapidly performed in a small space.

As illustrated in FIG. 12, the processor 470 may drive the first rear wheel 530 and the second rear wheel 540 at different ratios so as to turn the vehicle body (see reference numeral 1210).

The processor 470 may drive the first rear wheel 530 and the second rear wheel 540 at different ratios. The processor 470 may drive the first rear wheel 530 using a smaller force than when driving the second rear wheel 540.

For example, the processor 470 may perform control such that different driving forces are applied to the first rear wheel 530 and the second rear wheel 540. The processor 470 may drive the first rear wheel 530 using a% of the full driving force. The processor 470 may drive the second rear wheel 540 using b% of the full driving force. Here, a may be a number less than b.

The processor 470 may drive the first rear wheel 530 and the second rear wheel 540 so as to move the vehicle 100 in the reverse direction.

The processor 470 may drive the first front wheel 510 and the second front wheel 520. For example, the processor 470 may drive the first front wheel 510 and the second front wheel 520 so as to move the vehicle 100 in the reverse direction.

The processor 470 may release the first front wheel 510 and the second front wheel 520.

The processor 470 may release the first front wheel 510, and may drive the second front wheel 520.

The processor 470 may drive the first front wheel 510 and the second front wheel 520 at different ratios. For example, the processor 470 may drive the first front wheel 510 using a smaller force than when driving the second front wheel 520.

In the case in which the first rear wheel 530 and the second rear wheel 540 are driven at different ratios, the vehicle body may be turned about an axis 1220 formed outside the vehicle 100. The distance from the first rear wheel 530 to the axis 1220 is shorter than the distance from the second rear wheel 540 to the axis 1220. The turning radius of the first rear wheel 530 is shorter than the turning radius of the second rear wheel 540.

Because the driving force applied to the first rear wheel 530 is smaller than the driving force applied to the second rear wheel 540, the movement distance of the second rear wheel 540 is greater than the movement distance of the first rear wheel 530. The rotational displacement of the first rear wheel 530 about the axis 1220 as the center is shorter than the rotational displacement of the second rear wheel 540 about the axis 1220 as the center. Consequently, the vehicle body may be turned about the axis 1220.

As a result, perpendicular parking or parallel parking may be easily and rapidly performed in a small space.

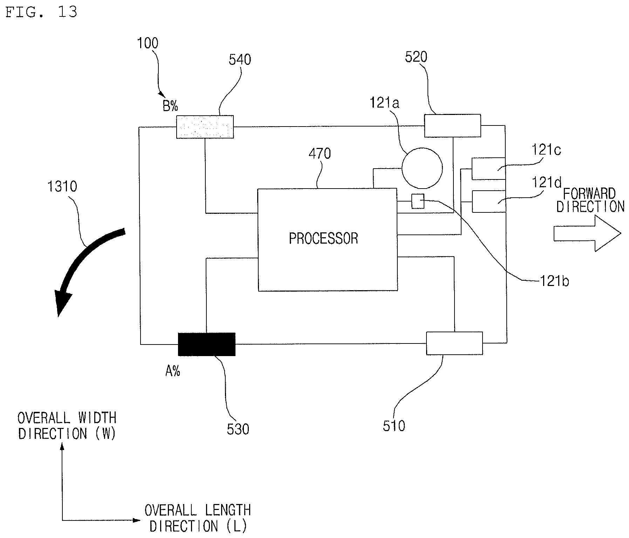

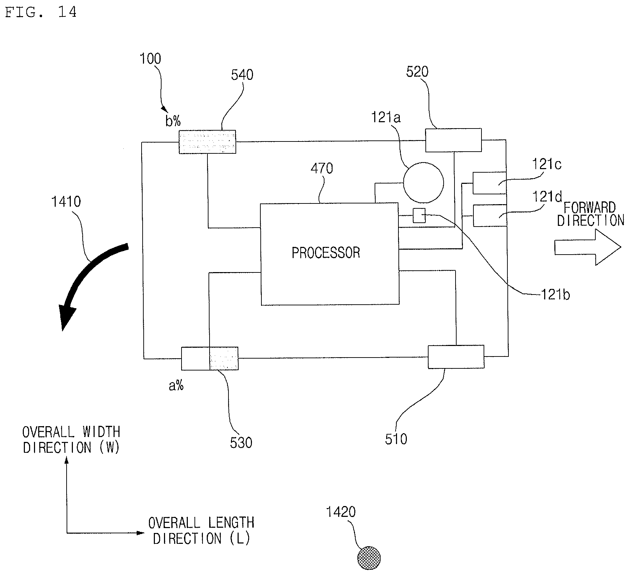

FIGS. 13 and 14 are reference views illustrating the operation of the parking control apparatus performed in accordance with an embodiment of the present invention in the case in which the vehicle 100 is a rear wheel drive vehicle.

Referring to FIGS. 13 and 14, the vehicle 100 may be a rear wheel drive vehicle. In the case in which the vehicle 100 is such a rear wheel drive vehicle, the front axle shaft may be a movable axle shaft, and the rear axle shaft may be a driving axle shaft. A differential may be provided at the rear axle shaft. Power from the power source may be supplied only to the rear wheels 530 and 540 via the rear axle shaft.

The processor 470 may drive the rear wheels 530 and 540 at the same ratio. Alternatively, the processor 470 may drive the rear wheels 530 and 540 at different ratios.

The processor 470 may simultaneously brake the front wheels 510 and 520 and the rear wheels 530 and 540. Alternatively, the processor 470 may individually brake the front wheels 510 and 520 and the rear wheels 530 and 540.

As illustrated in FIG. 13, the processor 470 may brake the first rear wheel 530 so as to fix the first rear wheel 530, and may drive the second rear wheel 540, so as to turn the vehicle body (see reference numeral 1310).

The processor 470 may brake the first rear wheel 530 so as to fix the first rear wheel 530. For example, the processor 470 may fully brake the first rear wheel 530 so as to fix the first rear wheel 530 such that the first rear wheel 530 cannot be rotated in the forward direction or in the reverse direction.

The processor 470 may drive the second rear wheel 540. For example, the processor 470 may drive the second rear wheel 540 so as to move the vehicle 100 in the reverse direction.

The processor 470 may release the first front wheel 510 and the second front wheel 520.

The processor 470 may brake the first front wheel 510 and the second front wheel 520 at different ratios. For example, the processor 470 may brake the first front wheel 510 using a larger force than when braking the second front wheel 520.

In the case in which the second rear wheel 540 is driven in the reverse direction in the state in which the first rear wheel 530 is fixed, the vehicle body may be turned about the first rear wheel 530 as the axis.

As a result, perpendicular parking or parallel parking may be easily and rapidly performed in a small space.

As illustrated in FIG. 14, the processor 470 may drive the first rear wheel 530 and the second rear wheel 540 at different ratios so as to turn the vehicle body (see reference numeral 1410).

The processor 470 may drive the first rear wheel 530 and the second rear wheel 540 at different ratios. For example, the processor 470 may drive the first rear wheel 530 using a smaller force than when driving the second rear wheel 540.

For example, the processor 470 may perform control such that different driving forces are applied to the first rear wheel 530 and the second rear wheel 540. The processor 470 may drive the first rear wheel 530 using a% of the full driving force. The processor 470 may drive the second rear wheel 540 using b% of the full driving force. Here, a may be a number less than b.

The processor 470 may drive the first rear wheel 530 and the second rear wheel 540 so as to move the vehicle 100 in the reverse direction.

The processor 470 may release the first front wheel 510 and the second front wheel 520.

The processor 470 may brake the first front wheel 510 and the second front wheel 520 at different ratios. For example, the processor 470 may brake the first front wheel 510 using a larger force than when braking the second front wheel 520.

In the case in which the first rear wheel 530 and the second rear wheel 540 are driven at different ratios, the vehicle body may be turned about an axis 1420 formed outside the vehicle 100. The distance from the first rear wheel 530 to the axis 1420 is shorter than the distance from the second rear wheel 540 to the axis 1420. The turning radius of the first rear wheel 530 is shorter than the turning radius of the second rear wheel 540.

Because the driving force applied to the first rear wheel 530 is smaller than the driving force applied to the second rear wheel 540, the movement distance of the second rear wheel 540 is greater than the movement distance of the first rear wheel 530. The rotational displacement of the first rear wheel 530 about the axis 1420 as the center is shorter than the rotational displacement of the second rear wheel 540 about the axis 1420 as the center. Consequently, the vehicle body may be turned about the axis 1420.

As a result, perpendicular parking or parallel parking may be easily and rapidly performed in a small space.

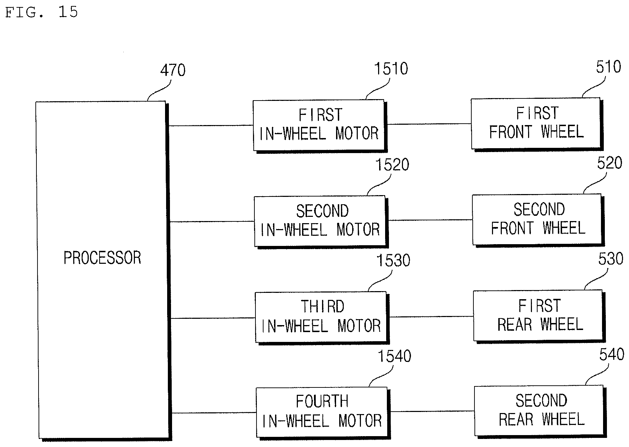

FIG. 15 is a reference block diagram illustrating the operation of the parking control apparatus performed under the control of a plurality of in-wheel motors in accordance with an embodiment of the present invention.

Referring to FIG. 15, the parking control apparatus 400 may include a plurality of in-wheel motors. The number of in-wheel motors is equal to the number of wheels 500.

The in-wheel motors may include a first in-wheel motor 1510, a second in-wheel motor 1520, a third in-wheel motor 1530, and a fourth in-wheel motor 1540.

The first in-wheel motor 1510 may supply driving force to the first front wheel 510. The second in-wheel motor 1520 may supply driving force to the second front wheel 520. The third in-wheel motor 1530 may supply driving force to the first rear wheel 530. The fourth in-wheel motor 1540 may supply driving force to the second rear wheel 540.

The in-wheel motors 1510, 1520, 1530, and 1540 may be controlled by the processor 470.

The processor 470 may individually control the in-wheel motors 1510, 1520, 1530, and 1540 in order to individually drive the wheels 510, 520, 530, and 540.

The processor 470 may individually control the in-wheel motors 1510, 1520, 1530, and 1540 in order to drive the wheels 510, 520, 530, and 540 at different ratios.

For example, the processor 470 may drive at least one of the right wheels 510 and 530 using a smaller force than when driving at least one of the left wheels 520 and 540 so as to turn the vehicle body.

For example, the processor 470 may drive at least one of the right wheels 510 and 530 using a larger force than when driving at least one of the left wheels 520 and 540 so as to turn the vehicle body.

The processor 470 may individually control the in-wheel motors 1510, 1520, 1530, and 1540 in order to drive the wheels 510, 520, 530, and 540 in different directions.

For example, the processor 470 may drive at least one of the right wheels 510 and 530 so as to be rotated in the first direction, and may drive at least one of the left wheels 520 and 540 so as to be rotated in the second direction, so as to turn the vehicle body.

For example, the processor 470 may drive at least one of the right wheels 510 and 530 so as to be rotated in the second direction, and may drive at least one of the left wheels 520 and 540 so as to be rotated in the first direction, so as to turn the vehicle body.

Here, the first direction may be the forward direction of the vehicle 100, and the second direction may be the reverse direction of the vehicle 100.

As a result, perpendicular parking or parallel parking may be easily and rapidly performed in a small space.

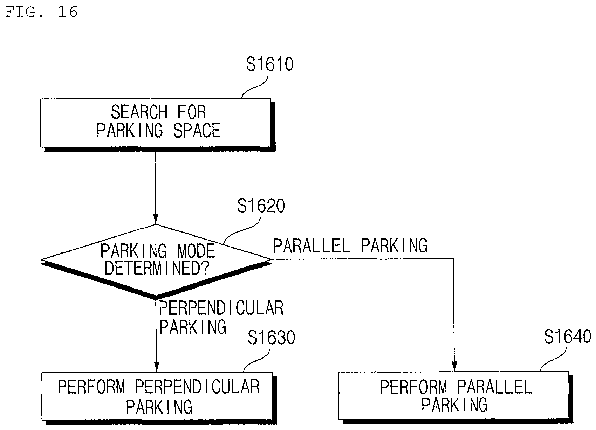

FIG. 16 is a reference flowchart illustrating the operation of the parking control apparatus performed in an autonomous parking situation in accordance with an embodiment of the present invention.

Referring to FIG. 16, the processor 470 may search for a parking space (S1610). The processor 470 may search for a parking space through the parking space searching unit 410 so as to acquire information about the parking space.

The processor 470 determines a parking mode (S1620). The processor 470 selects, according to the invention, one from between perpendicular parking and parallel parking based on the information about the parking space. Alternatively, not according to the invention, the processor 470 may select one from between perpendicular parking and parallel parking based on information about parking lines or information about parking states of nearby vehicles.

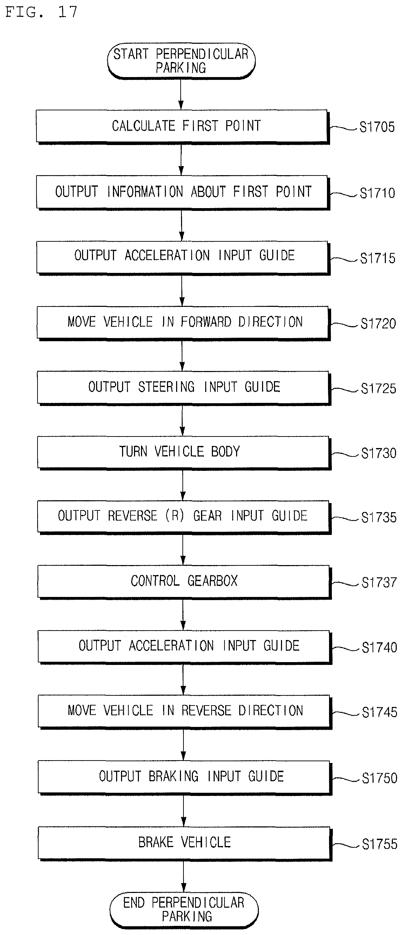

In the case in which perpendicular parking is selected, the processor 470 performs perpendicular parking (S1630). The perpendicular parking operation performed by the parking control apparatus 400 will be described in detail with reference to FIGS. 17 to 18D.

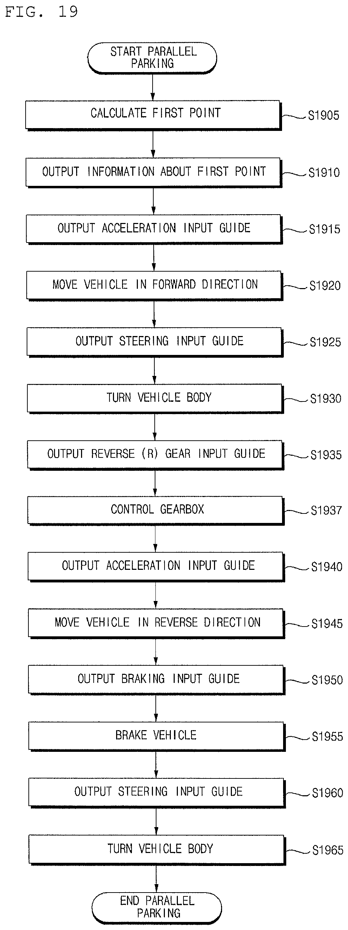

In the case in which parallel parking is selected, the processor 470 performs parallel parking (S1640). The parallel parking operation performed by the parking control apparatus 400 will be described in detail with reference to FIGS. 19 to 20F.

FIG. 17 is a reference flowchart illustrating a perpendicular parking operation according to an embodiment of the present invention.

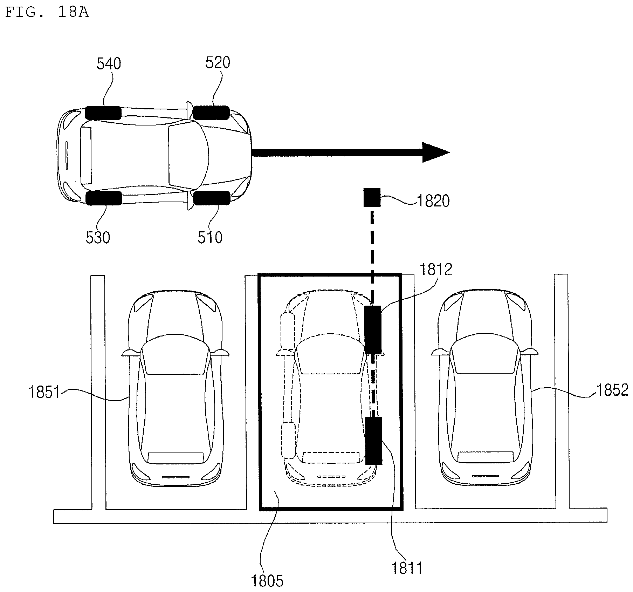

FIGS. 18A to 18D are reference views illustrating perpendicular parking operation situations according to embodiments of the present invention.

Referring to these figures, the processor 470 calculates a first point 1820 (S1705).

The first point 1820 is a point at which at least one of the wheels 500 must be located when the vehicle body is turned for perpendicular parking.

As illustrated in FIG. 18A, the processor 470 predicts a first prediction point 1811 at which the first rear wheel 530, which is one of the wheels 500, will be located in the state in which perpendicular parking of the vehicle 100 has been completed in a found parking space 1805. The processor 470 predicts a second prediction point 1812 at which the first front wheel 510, which is one of the wheels 500, will be located in the state in which the perpendicular parking of the vehicle 100 has been completed in the found parking space 1805.

The first point 1820 is located on a line passing through the first prediction point 1811 and the second prediction point 1812.

In the case in which nearby vehicles 1851 and 1852 have already been parked around the parking space 1805 in the lateral direction thereof, the processor 470 calculates the first point 1820 further based on the distance between the vehicle 100 and the nearby vehicles 1851 and 1852. According to the invention, the processor 470 calculates the first point 1820 such that the shortest distance between the vehicle 100 and the nearby vehicles 1851 and 1852 is equal to or greater than a reference distance in the state in which the first rear wheel 530 is located at the first point 1820. Here, the reference distance may be a length equivalent to 10% of the width of the vehicle 100. As a result, the vehicle 100 may be spaced apart from the nearby vehicles 1851 and 1852 by a predetermined distance, thereby preventing the vehicle 100 from colliding with the nearby vehicles 1851 and 1852.

The processor 470 may perform control such that information about the first point 1820 is output through the output unit 450 (S1710).

The processor 470 may perform control such that an acceleration input guide is output through the output unit 450 (S1715).

Subsequently, the processor 470 may drive at least one of the wheels 500 so as to move the vehicle 100 in the forward direction (S1720).

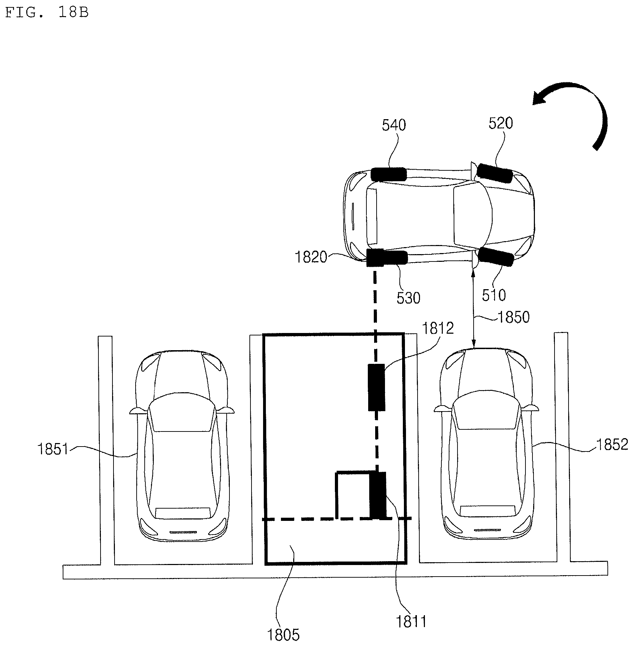

As illustrated in FIG. 18B, the processor 470 drives at least one of the wheels 500 such that the first rear wheel 530, which is one of the wheels 500, is located at the first point 1820. In this case, the vehicle 100 may be moved in the forward direction.

The processor 470 drives at least one of the wheels 500 such that the first rear wheel 530 is located at the first point 1820. For example, in the case in which the vehicle is a front wheel drive vehicle, the processor 470 may drive at least one of the first front wheel 510 and the second front wheel 520. For example, in the case in which the vehicle is a four wheel drive vehicle, the processor 470 may drive at least one of the first front wheel 510, the second front wheel 520, the first rear wheel 530, and the second rear wheel 540. For example, in the case in which the vehicle is a rear wheel drive vehicle, the processor 470 may drive at least one of the first rear wheel 530 and the second rear wheel 540.

The processor 470 may drive at least one of the wheels 500 based on a driving operation input received from the driving operation device 121 such that the first rear wheel 530 is located at the first point 1820.

In an autonomous parking situation, the processor 470 may control the wheels 500 without receiving a driving operation input from the driving operation device 121. In a manual parking situation, the processor 470 may receive a driving operation input from the driving operation device 121 so as to control the wheels 500.

Meanwhile, nearby vehicles 1851 and 1852 may have already been parked beside the parking space 1805. In this case, the processor 470 may control the wheels 500 so as to move the vehicle 100 in the forward direction in the state in which the vehicle 100 is spaced apart from the nearby vehicles 1851 and 1852 by the shortest distance or more. Here, the shortest distance may be a length equivalent to 10% or more of the overall width of the vehicle 100. As a result, the vehicle 100 may be spaced apart from the nearby vehicles 1851 and 1852 by a predetermined distance, thereby preventing the vehicle 100 from colliding with the nearby vehicles 1851 and 1852.

The processor 470 may perform control such that a steering input guide is output through the output unit 450 (S1725).

The processor 470 may output the direction in which the steering wheel is to be rotated through the output unit 450. The processor 470 may output the extent to which the steering wheel is to be rotated through the output unit 450.

In the state in which steering has been performed, the processor 470 may control the wheels 500 so as to turn the vehicle body (S1730).

As illustrated in FIG. 18B, the processor 470 may perform control so as to steer the vehicle 100. Specifically, the processor 470 may perform control such that those among the wheels that are connected to the steering wheel 121a, i.e. the wheels 510 and 520, are directed to the left or the right. For example, the processor 470 may perform control such that the wheels 510 and 520, connected to the steering wheel 121a, are maximally directed to the left or the right.

The processor 470 may fix the first rear wheel 530, and may individually brake, release, or drive the remaining ones of the wheels 500 excluding the first rear wheel 530, i.e. the wheels 510, 520, and 540, so as to turn the vehicle body about the first rear wheel 530 as the axis.

In the case in which the vehicle 100 is a front wheel drive vehicle, control may be performed as described with reference to FIGS. 7 and 8 so as to turn the vehicle body.

In the case in which the vehicle 100 is a four wheel drive vehicle, control may be performed as described with reference to FIGS. 9 to 12 so as to turn the vehicle body.

In the case in which the vehicle 100 is a rear wheel drive vehicle, control may be performed as described with reference to FIGS. 13 and 14 so as to turn the vehicle body.

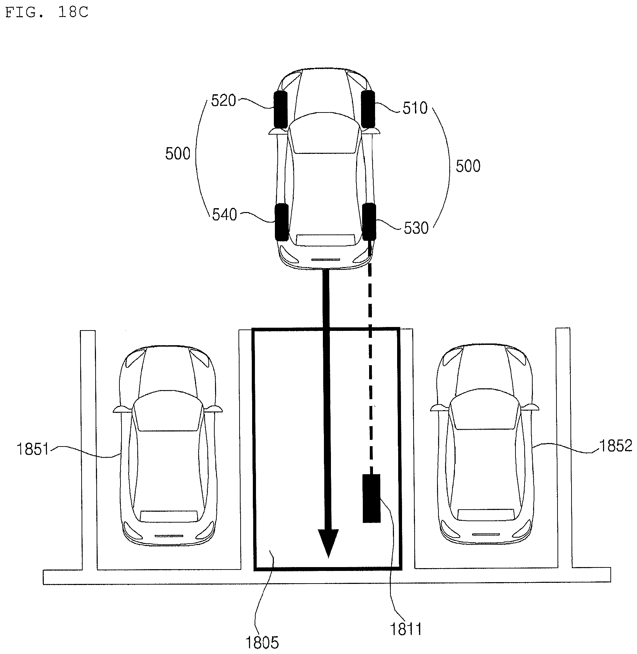

Meanwhile, as illustrated in FIG. 18C, the processor 470 may perform control so as to turn the vehicle body such that the vehicle body is aligned with the parking space 1805.

For example, the processor 470 may control the vehicle body such that the vehicle 100 is parked in the parking space 1805 only through forward or reverse movement without further steering.

For example, the processor 470 may perform control such that the vehicle body is turned by 90 degrees.

After the vehicle body has been turned, the processor 470 may return the steering state to the original state. For example, the processor 470 may perform control such that the wheels 510 and 520, connected to the steering wheel 121a, are directed in the forward direction.

The processor 470 may perform control such that a reverse (R) gear input guide is output through the output unit 450 (S1735).

The processor 470 may control the gearbox (S1737). The processor 470 may perform control such that the state of the gearbox is switched to a reverse (R) gear state.

The processor 470 may perform control such that the state of the gearbox is switched to the reverse gear state based on a driving operation input received from the driving operation device 121.

In an autonomous parking situation, the processor 470 may control the gearbox without receiving a driving operation input from the driving operation device 121. In a manual parking situation, the processor 470 may receive a driving operation input from the driving operation device 121 so as to control the gearbox.

The processor 470 may perform control such that an acceleration input guide is output through the output unit 450 (S1740).

The processor 470 may drive at least one of the wheels 500 so as to move the vehicle 100 in the reverse direction (S1745).

The processor 470 may perform control such that a braking input guide is output through the output unit 450 (S1750).

The processor 470 may brake at least one of the wheels 500 (S1755).

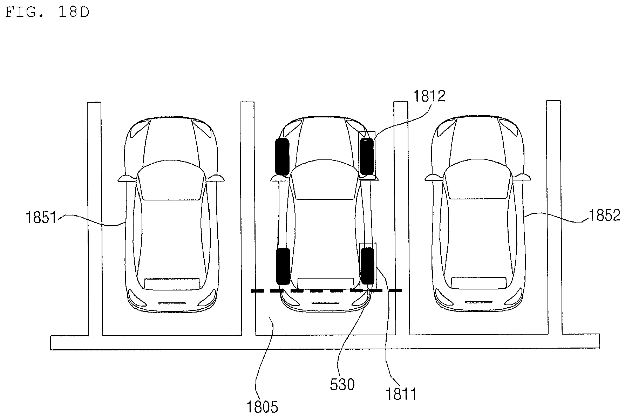

As illustrated in FIG. 18D, the processor 470 may drive and then brake at least one of the wheels 500 such that the first rear wheel 530 is located at the first prediction point 1811. In this case, the vehicle 100 may be moved in the reverse direction.

The processor 470 may drive and then brake at least one of the wheels 500 such that the first front wheel 510 is located at the first prediction point 1812.

For example, in the case in which the vehicle is a front wheel drive vehicle, the processor 470 may drive at least one of the first front wheel 510 and the second front wheel 520. Subsequently, the processor 470 may brake the wheels 500.

For example, in the case in which the vehicle is a four wheel drive vehicle, the processor 470 may drive at least one of the first front wheel 510, the second front wheel 520, the first rear wheel 530, and the second rear wheel 540. Subsequently, the processor 470 may brake the wheels 500.

For example, in the case in which the vehicle is a rear wheel drive vehicle, the processor 470 may drive at least one of the first rear wheel 530 and the second rear wheel 540. Subsequently, the processor 470 may brake the wheels 500.

The processor 470 may drive at least one of the wheels 500 based on a driving operation input received from the driving operation device 121 such that the first rear wheel 530 is located at the first prediction point 1812.

In an autonomous parking situation, the processor 470 may control the wheels 500 without receiving a driving operation input from the driving operation device 121. In a manual parking situation, the processor 470 may receive a driving operation input from the driving operation device 121 so as to control the wheels 500.

Meanwhile, in some embodiments, steps S1710, S1715, S1725, S1735, S1740, and S1750, which are steps of outputting the driving operation input guides, may be omitted in the autonomous parking situation.

FIG. 19 is a reference flowchart illustrating a parallel parking operation according to an embodiment of the present invention.

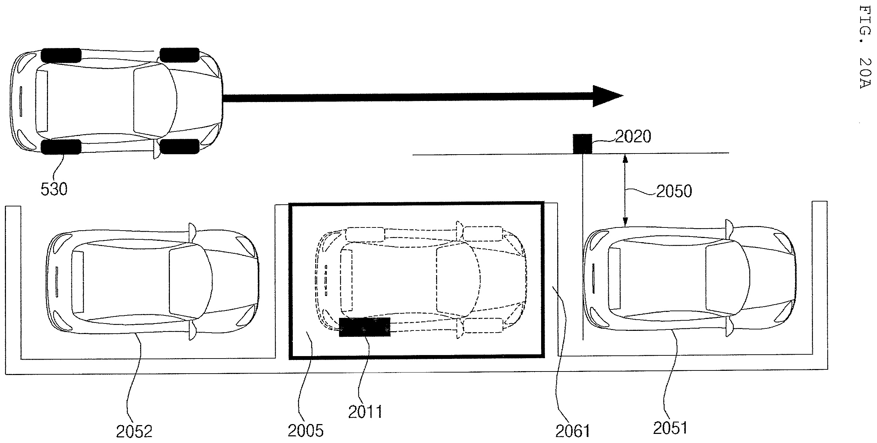

FIGS. 20A to 20F are reference views illustrating parallel parking operation situations according to embodiments of the present invention.

Referring to these figures, the processor 470 may calculate a first point 2020 (S1905).

The first point 2020 may be a point at which at least one of the wheels 500 must be located when the vehicle body is turned for parallel parking.

As illustrated in FIG. 20A, the processor 470 may predict a first prediction point 2011 at which the first rear wheel 530 will be located in the state in which the parallel parking of the vehicle 100 has been completed in a found parking space 2005. The found parking space 2005 may be a parallel parking space defined between a first nearby vehicle 2051 and a second nearby vehicle 2052.

The first point 2020 may be set based on the first prediction point 2011, the location of the first nearby vehicle 2051, and the distance between the first nearby vehicle 2051 and the vehicle 100 in the overall width direction.

In the case in which the nearby vehicles 2051 and 2052 have already been parked around the parking space 2005 in the longitudinal direction thereof, the processor 470 may calculate the first point 2020 based on the location of the first nearby vehicle 2051. For example, the processor 470 may calculate the first point 2020 on an extension line from a rear bumper of the first nearby vehicle 2051 in the overall width direction. That is, the first point 2020 may be calculated based on the relationship between the vehicle 100 and the first nearby vehicle 2051, thereby preventing the vehicle 100 from colliding with the nearby vehicles 2051 and 2052.

In the case in which no nearby vehicle has been parked in front of the vehicle 100 in the longitudinal direction of the parking space 2005, the processor 470 may calculate the first point 2020 based on parking lines. For example, the processor 470 may calculate the first point 2020 on an extension line from a first parking line 2061 in the width direction of the parking space 2005. That is, the first point 2020 may be calculated based on the relationship between the vehicle 100 and the parking lines, whereby the vehicle 100 may be parked without deviating from the parking lines.

In the case in which nearby vehicles 2051 and 2052 have already been parked around the parking space 2005 in the longitudinal direction thereof, the processor 470 may calculate the first point 2020 based on the distance between the vehicle 100 and the nearby vehicles 2051 and 2052 in the overall width direction. For example, the processor 470 may calculate the first point 2020 such that the shortest distance between the vehicle 100 and the nearby vehicles 2051 and 2052 is equal to or greater than a reference distance in the state in which the first rear wheel 530 is located at the first point 2020. Here, the reference distance may be a length equivalent to 10% of the width of the vehicle 100. As a result, the vehicle 100 may be spaced apart from the nearby vehicles 2051 and 2052 by a predetermined distance, thereby preventing the vehicle 100 from colliding with the nearby vehicles 2051 and 2052.

The processor 470 may perform control such that information about the first point 2020 is output through the output unit 450 (S1910).

The processor 470 may perform control such that an acceleration input guide is output through the output unit 450 (S1915).

Subsequently, the processor 470 may drive at least one of the wheels 500 so as to move the vehicle 100 in the forward direction (S1920).

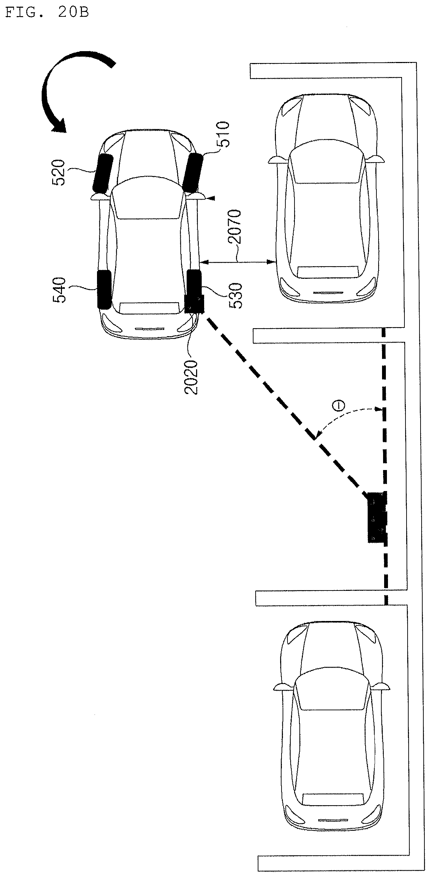

As illustrated in FIG. 20B, the processor 470 may drive at least one of the wheels 500 such that the first rear wheel 530, which is one of the wheels 500, is located at the first point 2020. In this case, the vehicle 100 may be moved in the forward direction.

The processor 470 may drive at least one of the wheels 500 such that the first rear wheel 530 is located at the first point 2020. For example, in the case in which the vehicle is a front wheel drive vehicle, the processor 470 may drive at least one of the first front wheel 510 and the second front wheel 520. For example, in the case in which the vehicle is a four wheel drive vehicle, the processor 470 may drive at least one of the first front wheel 510, the second front wheel 520, the first rear wheel 530, and the second rear wheel 540. For example, in the case in which the vehicle is a rear wheel drive vehicle, the processor 470 may drive at least one of the first rear wheel 530 and the second rear wheel 540.

The processor 470 may drive at least one of the wheels 500 based on a driving operation input received from the driving operation device 121 such that the first rear wheel 530 is located at the first point 2020.

In an autonomous parking situation, the processor 470 may control the wheels 500 without receiving a driving operation input from the driving operation device 121. In a manual parking situation, the processor 470 may receive a driving operation input from the driving operation device 121 so as to control the wheels 500.

Meanwhile, nearby vehicles 2051 and 2052 may have already been parked beside the parking space 2005. In this case, the processor 470 may control the wheels 500 so as to move the vehicle 100 in the forward direction in the state in which the vehicle 100 is spaced apart from the nearby vehicles 2051 and 2052 by the shortest distance or more. Here, the shortest distance may be a length equivalent to 10% or more of the overall width of the vehicle 100. As a result, the vehicle 100 may be spaced apart from the nearby vehicles 2051 and 2052 by a predetermined distance, thereby preventing the vehicle 100 from colliding with the nearby vehicles 2051 and 2052.

The processor 470 may perform control such that a steering input guide is output through the output unit 450 (S1925).

The processor 470 may output the direction in which the steering wheel is to be rotated through the output unit 450. The processor 470 may output the extent to which the steering wheel is to be rotated through the output unit 450.

In the state in which steering has been performed, the processor 470 may control the wheels 500 so as to turn the vehicle body (S1930).

As illustrated in FIG. 20B, the processor 470 may perform control so as to steer the vehicle 100. Specifically, the processor 470 may perform control such that those among the wheels that are connected to the steering wheel 121a, i.e. the wheels 510 and 520, are directed to the left or the right.

For example, the processor 470 may perform control such that the vehicle 100 is steered toward the nearby vehicle 2051.

For example, the processor 470 may set the extent of steering in proportion to the distance 2070 between the vehicle 100 and the nearby vehicle 2051 in the overall width direction.

In the case in which the distance 2070 between the vehicle 100 and the nearby vehicle 2051 is 30% of the overall width of the vehicle 100, the processor 470 may set the extent of steering to 30% of the maximum extent of steering.

In the case in which the distance 2070 between the vehicle 100 and the nearby vehicle 2051 is 60% of the overall width of the vehicle 100, the processor 470 may set the extent of steering to 60% of the maximum extent of steering.

In the case in which the distance 2070 between the vehicle 100 and the nearby vehicle 2051 is 100% of the overall width of the vehicle 100, the processor 470 may set the extent of steering to 100% of the maximum extent of steering.

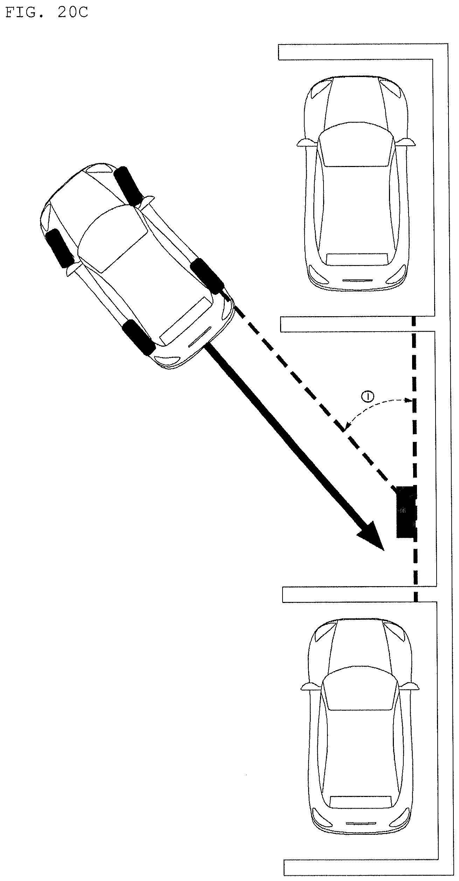

As illustrated in FIG. 20C, the processor 470 may fix the first rear wheel 530, and may individually brake, release, or drive the remaining ones of the wheels 500 excluding the first rear wheel 530, i.e. the wheels 510, 520, and 540, so as to turn the vehicle body about the first rear wheel 530 as the axis.

In the case in which the vehicle 100 is a front wheel drive vehicle, control may be performed as described with reference to FIGS. 7 and 8 so as to turn the vehicle body.

In the case in which the vehicle 100 is a four wheel drive vehicle, control may be performed as described with reference to FIGS. 9 to 12 so as to turn the vehicle body.

In the case in which the vehicle 100 is a rear wheel drive vehicle, control may be performed as described with reference to FIGS. 13 and 14 so as to turn the vehicle body.

After the vehicle body has been turned, the processor 470 may return the steering state to the original state. For example, the processor 470 may perform control such that the wheels 510 and 520, connected to the steering wheel 121a, are directed in the forward direction.

The processor 470 may perform control such that a shift input guide is output through the output unit 450 (S1935).

The processor 470 may control the gearbox (S1937). The processor 470 may perform control such that the state of the gearbox is switched to a reverse (R) gear state.

The processor 470 may perform control such that the state of the gearbox is switched to the reverse gear state based on a driving operation input received from the driving operation device 121.

In an autonomous parking situation, the processor 470 may control the gearbox without receiving a driving operation input from the driving operation device 121. In a manual parking situation, the processor 470 may receive a driving operation input from the driving operation device 121 so as to control the gearbox.

The processor 470 may perform control such that an acceleration input guide is output through the output unit 450 (S1940).

The processor 470 may drive at least one of the wheels 500 so as to move the vehicle 100 in the reverse direction (S1945).

The processor 470 may perform control such that a braking input guide is output through the output unit 450 (S1950).

The processor 470 may brake at least one of the wheels 500 (S1955).

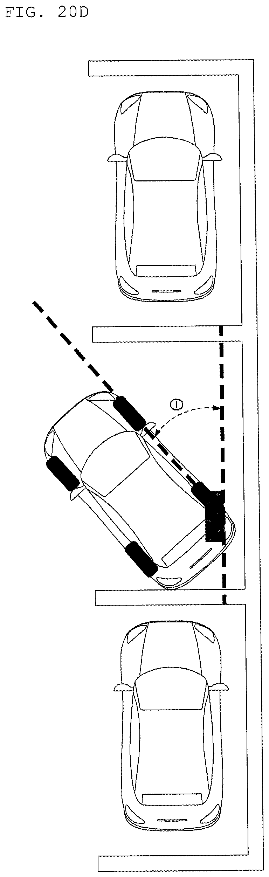

As illustrated in FIG. 20D, the processor 470 may drive and then brake at least one of the wheels 500 such that the first rear wheel 530 is located at the first prediction point 2011. In this case, the vehicle 100 may be moved in the reverse direction.

For example, in the case in which the vehicle is a front wheel drive vehicle, the processor 470 may drive at least one of the first front wheel 510 and the second front wheel 520. Subsequently, the processor 470 may brake the wheels 500.

For example, in the case in which the vehicle is a four wheel drive vehicle, the processor 470 may drive at least one of the first front wheel 510, the second front wheel 520, the first rear wheel 530, and the second rear wheel 540. Subsequently, the processor 470 may brake the wheels 500.

For example, in the case in which the vehicle is a rear wheel drive vehicle, the processor 470 may drive at least one of the first rear wheel 530 and the second rear wheel 540. Subsequently, the processor 470 may brake the wheels 500.

The processor 470 may drive at least one of the wheels 500 based on a driving operation input received from the driving operation device 121 such that the first rear wheel 530 is located at the first prediction point.

In an autonomous parking situation, the processor 470 may control the wheels 500 without receiving a driving operation input from the driving operation device 121. In a manual parking situation, the processor 470 may receive a driving operation input from the driving operation device 121 so as to control the wheels 500.

The processor 470 may perform control such that a steering input guide is output through the output unit 450 (S1960).

The processor 470 may output the direction in which the steering wheel is to be rotated through the output unit 450. The processor 470 may output the extent to which the steering wheel is to be rotated through the output unit 450.

In the state in which steering has been performed, the processor 470 may control the wheels 500 so as to turn the vehicle body (S1965).

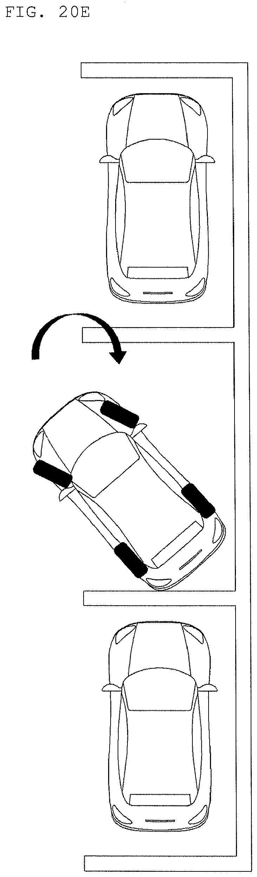

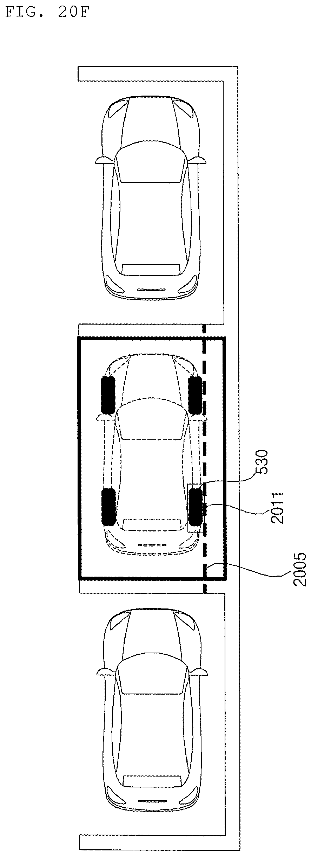

As illustrated in FIGS. 20E and 20F, the processor 470 may perform control so as to steer the vehicle 100. Specifically, the processor 470 may perform control such that those among the wheels that are connected to the steering wheel 121a, i.e. the wheels 510 and 520, are directed to the left or the right.

For example, the processor 470 may perform control such that steering is performed in the direction opposite to the steering direction at step S1930.

For example, the processor 470 may perform control such that steering is performed to the steering extent at step S1930.

The processor 470 may fix the first rear wheel 530, and may individually brake, release, or drive the remaining ones of the wheels 500 excluding the first rear wheel 530, i.e. the wheels 510, 520, and 540, so as to turn the vehicle body about the first rear wheel 530 as the axis in the parallel parking space 2005

In the case in which the vehicle 100 is a front wheel drive vehicle, control may be performed as described with reference to FIGS. 7 and 8 so as to turn the vehicle body.

In the case in which the vehicle 100 is a four wheel drive vehicle, control may be performed as described with reference to FIGS. 9 to 12 so as to turn the vehicle body.

In the case in which the vehicle 100 is a rear wheel drive vehicle, control may be performed as described with reference to FIGS. 13 and 14 so as to turn the vehicle body.

After the vehicle body has been turned, the processor 470 may return the steering state to the original state. For example, the processor 470 may perform control such that the wheels 510 and 520, connected to the steering wheel 121a, are directed in the forward direction.

Meanwhile, in some embodiments, steps S1910, S1915, S1925, S1935, S1940, S1950, and S1960, which are steps of outputting the driving operation input guides, may be omitted in the autonomous parking situation.

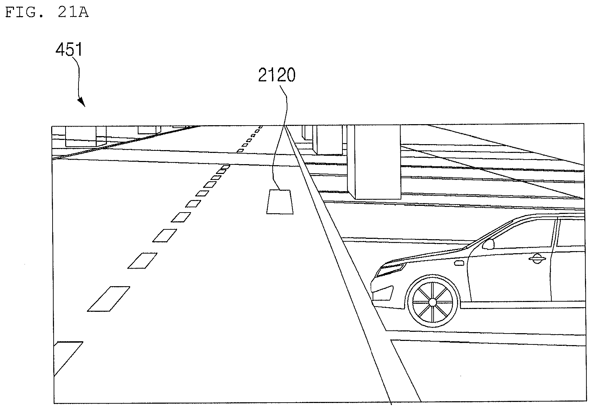

FIGS. 21A to 21E are reference views illustrating operations of outputting driving operation input guides in accordance with embodiments of the present invention.

Referring to FIG. 21A, the processor 470 may perform control such that a first point 2120 is output through the output unit 450.

Here, the first point 2120 may be information about a point at which at least one of the wheels 500 is to be located when the vehicle body is turned as the result of controlling the wheels.

The first point 2120 may be differently calculated depending on whether the parking mode to be performed is perpendicular parking or parallel parking.

In the perpendicular parking mode, the processor 470 may predict a first prediction point at which the first rear wheel 530, which is one of the wheels 500, will be located in the state in which the perpendicular parking of the vehicle 100 has been completed in a found parking space. The processor 470 may predict a second prediction point at which the first front wheel 510, which is one of the wheels 500, will be located in the state in which the perpendicular parking of the vehicle 100 has been completed in the found parking space. Here, the first point 2120 may be located on a line passing through the first prediction point and the second prediction point.

In the case in which nearby vehicles have already been parked around the parking space in the lateral direction thereof, the processor 470 may calculate the first point 2120 further based on the distance between the vehicle 100 and the nearby vehicles. For example, the processor 470 may calculate the first point 2120 such that the shortest distance between the vehicle 100 and the nearby vehicles is equal to or greater than a reference distance in the state in which the first rear wheel 530 is located at the first point 2120.

In the parallel parking mode, the processor 470 may predict a first prediction point at which the first rear wheel 530 will be located in the state in which the parallel parking of the vehicle 100 has been completed in a found parking space. The found parking space may be a parallel parking space defined between a first nearby vehicle and a second nearby vehicle.

The first point may be set based on the first prediction point, the location of the first nearby vehicle, and the distance between the first nearby vehicle and the vehicle 100 in the overall width direction.

In the case in which the nearby vehicles have already been parked around the parking space in the longitudinal direction thereof, the processor 470 may calculate the first point 2120 based on the location of the first nearby vehicle. For example, the processor 470 may calculate the first point 2120 on an extension line from a rear bumper of the first nearby vehicle in the overall width direction.

In the case in which no nearby vehicle has been parked in front of the vehicle 100 in the longitudinal direction of the parking space, the processor 470 may calculate the first point 2120 based on parking lines. For example, the processor 470 may calculate the first point 2120 on an extension line from a first parking line in the width direction of the parking space.

In the case in which nearby vehicles have already been parked around the parking space in the longitudinal direction thereof, the processor 470 may calculate the first point 2120 based on the distance between the vehicle 100 and the nearby vehicles in the overall width direction. For example, the processor 470 may calculate the first point 2120 such that the shortest distance between the vehicle 100 and the nearby vehicles is equal to or greater than a reference distance in the state in which the first rear wheel 530 is located at the first point 2120. Here, the reference distance may be a length equivalent to 10% of the width of the vehicle 100.

The first point 2120 may be displayed in the form of augmented reality. For example, the display unit 451 may be implemented as an HUD. The processor 470 may display the first point 2120 on the HUD in the form of augmented reality such that the first point 2120 overlaps a real road surface.

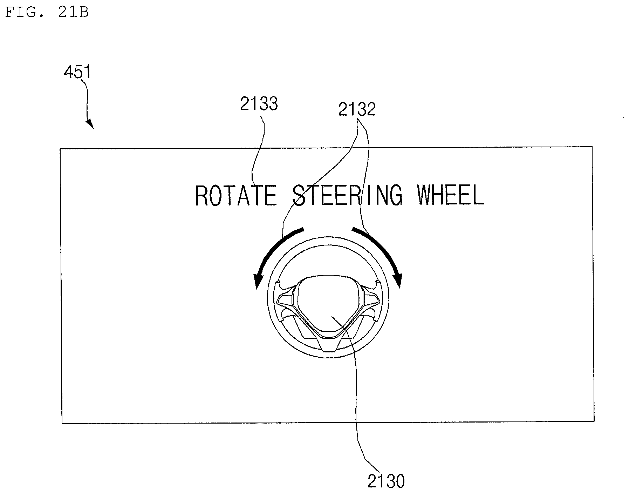

Referring to FIGS. 21B to 21E, the processor 470 may output a driving operation input guide through the output unit 450. The processor 470 may display a predetermined graphic object on the display unit 451 in order to output an operation input guide. For example, the processor 470 may display text or an image.

In the case in which the first rear wheel 530 is located at the first point 2120, the processor 470 may perform control such that at least one selected from among a braking input guide, a steering input guide, and a shift input guide is output through the output unit 450.

After the turning of the vehicle body has been completed, the processor 470 may perform control such that at least one selected from among a braking input guide, a steering input guide, a shift input guide, and an acceleration input guide is output through the output unit 450.

As illustrated in FIG. 21B, the processor 470 may output a steering input guide in order to perform the operation required for parking. In order to perform the required operation, the processor 470 may output the direction in which steering is to be performed and the extent to which steering is to be performed.

For example, the processor 470 may display an image 2130 corresponding to the steering wheel, and may display an arrow 2132. Here, the direction of the arrow may indicate the direction in which steering is to be performed, and the length of the arrow may indicate the extent to which steering is to be performed.

Meanwhile, the output unit 450 may include a light emitting element provided in the steering wheel. The processor 470 may drive the light emitting element provided in the steering wheel in order to output the steering input guide.

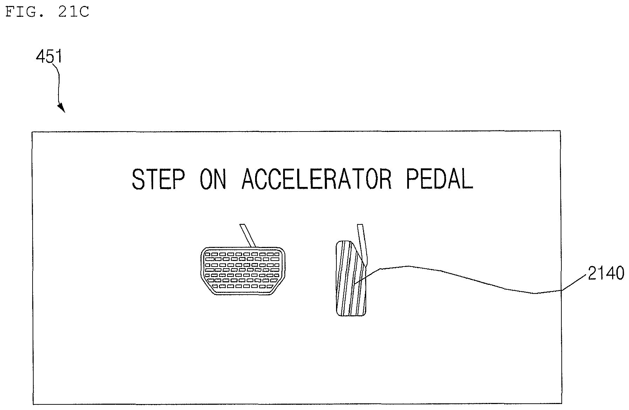

As illustrated in FIG. 21C, the processor 470 may output an acceleration input guide in order to perform the operation required for parking.

For example, the processor 470 may display an image 2140 corresponding to the accelerator pedal. In the case in which an acceleration input is required, the processor 470 may perform control such that the shape or the color of the image 2140 corresponding to the accelerator pedal is changed.

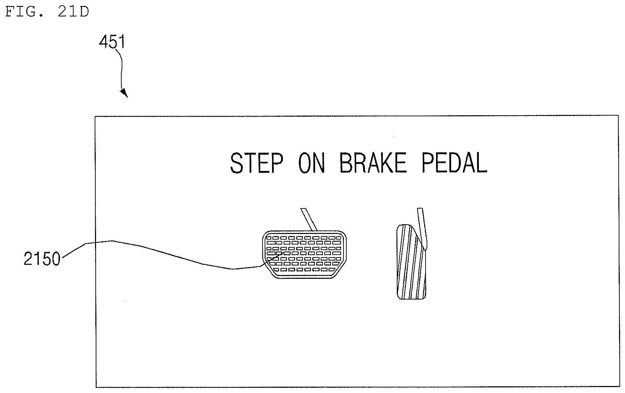

As illustrated in FIG. 21D, the processor 470 may output a braking input guide in order to perform the operation required for parking.

For example, the processor 470 may display an image 2150 corresponding to the brake pedal. In the case in which a braking input is required, the processor 470 may perform control such that the shape or the color of the image 2150 corresponding to the brake pedal is changed.

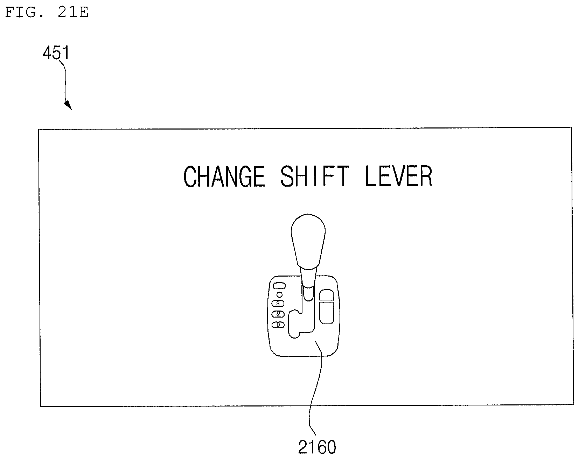

As illustrated in FIG. 21E, the processor 470 may output a shift input guide in order to perform the operation required for parking.

For example, the processor 470 may display an image 2160 corresponding to the shift lever. The processor 470 may display an image corresponding to the state of the gearbox that is required for forward movement or an image corresponding to the state of the gearbox that is required for reverse movement.

The present invention as described above may be implemented as code that can be written on a computer-readable medium in which a program is recorded and thus read by a computer. The computer-readable medium includes all kinds of recording devices in which data is stored in a computer-readable manner. Examples of the computer-readable recording medium may include a hard disk drive (HDD), a solid state disk (SSD), a silicon disk drive (SDD), a read only memory (ROM), a random access memory (RAM), a compact disk read only memory (CD-ROM), a magnetic tape, a floppy disc, and an optical data storage device. In addition, the computer-readable medium may be implemented as a carrier wave (e.g., data transmission over the Internet). In addition, the computer may include the processor 270 or the controller 170. Thus, the above detailed description should not be construed as being limited to the embodiments set forth herein in all terms and be considered by way of example. The scope of the present invention should be determined by the reasonable interpretation of the accompanying claims and all changes in the equivalent range of the present invention are intended to be included in the scope of the present invention.

As is apparent from the above description, the embodiments of the present invention have one or more effects as follows.

First, it is possible to individually control a plurality of wheels, thereby rapidly parking a vehicle.

Second, it is possible to minimize forward movement, reverse movement, and steering operations, thereby easily parking a vehicle.

Third, it is possible for even an inexperienced driver to easily park a vehicle in a manual parking mode.

Fourth, it is possible to park a vehicle even in a small space.

Effects of the present invention should not be limited to the aforementioned effects and other not-mentioned effects will be clearly understood by those skilled in the art from the claims.

Although embodiments have been described with reference to a number of illustrative embodiments thereof, it should be understood that numerous other modifications and embodiments can be devised by those skilled in the art. More particularly, various variations and modifications are possible in the component parts and/or arrangements of the subject combination arrangement. In addition to variations and modifications in the component parts and/or arrangements, alternatives uses will also be apparent to those skilled in the art.

## Claims

1. A vehicle (100) comprising a parking control apparatus (400), the parking control apparatus (400) comprising:
a plurality of wheels (500) provided in a vehicle body; and
a processor (470) for performing control such that the wheels are individually braked, released, or driven so as to turn the vehicle body about an axis formed in an overall height direction,
wherein the plurality of wheels (500) comprises a first front wheel (510), a second front wheel (520), a first rear wheel (530), and a second rear wheel (540),
wherein the processor (470) is configured to:
search for a parking space (1805, 2005) through a parking space searching unit (410) and acquire information about the parking space (1805, 2005),
determine a parking mode between a perpendicular parking mode and a parallel parking mode, based on the acquired information about the parking space (1805, 2005),
determine a first point (1820, 2020) corresponding to a location of the first rear wheel (530) to be braked,
perform control such that the first rear wheel (530) is braked and thus fixed at the first point (1820, 2020); and
perform control so that at least one of the first front wheel (510), the second front wheel (520) and the second rear wheel (540) is driven to thereby turn the vehicle body about the first rear wheel (530) as the axis, and
wherein the processor (470) is further configured to control heights of suspension devices (600) such that a height of a first suspension device corresponding to the first rear wheel (530) is lower than heights of the other suspension devices, when the vehicle is turned about the first rear wheel (530),
**characterized in that**
the first point (1820, 2020) is a point where a shortest distance between the vehicle (100) and nearby vehicles is equal to or greater than a reference distance in a state in which the first rear wheel (530) is located at the first point (1820, 2020),
in case the perpendicular parking mode is selected based on the acquired information about the parking space (1805, 2005), the processor (470) is configured to:
determine a first prediction point (1811) at which the first rear wheel (530) will be located in a state in which perpendicular parking is completed in the parking space (1805), and
determine a second prediction point (1812) at which the first front wheel (510) will be located in a state in which perpendicular parking is completed in the parking space (1805),
wherein the first point (1820) is aligned with the first prediction point (1811) and the second prediction point (1812), and
wherein the first rear wheel (530) and the first front wheel (510) are located on a same side of the vehicle (100), and
in case the parallel parking mode is selected based on the acquired information about the parking space (1805, 2005), the processor (470) is configured to:
determine a first prediction point (2011) at which the first rear wheel (530) will be located in a state in which parallel parking is completed in the parking space (2005), the parking space (2005) being a parallel parking space defined between a first nearby vehicle (2051) and a second nearby vehicle (2052), and
determine the first point (2020) based on the first prediction point (2011), a location of the first nearby vehicle (2051), and a distance between the first nearby vehicle (2051) and the vehicle (100) in an overall width direction.

2. The vehicle (100) comprising a parking control apparatus (400) according to claim 1, wherein
the vehicle (100) is a front wheel drive vehicle, and
the processor (470) is configured to perform control such that the first rear wheel is braked and thus fixed, the second rear wheel is released, and the first front wheel and the second front wheel are driven so as to turn the vehicle body.

3. The vehicle (100) comprising a parking control apparatus (400) according to claim 1, wherein
the vehicle (100) is a front wheel drive vehicle, and
the processor (470) is configured to perform control such that the first rear wheel and the second rear wheel are braked at different ratios, and the first front wheel and the second front wheel are driven so as to turn the vehicle body.

4. The vehicle (100) comprising a parking control apparatus (400) according to claim 1, wherein
the vehicle (100) is a four wheel drive vehicle, and
the processor (470) is configured to perform control such that the first rear wheel is braked and thus fixed, and the first front wheel, the second front wheel, and the second rear wheel are driven so as to turn the vehicle body.

5. The vehicle (100) comprising a parking control apparatus (400) according to claim 1, wherein
the vehicle (100) is a four wheel drive vehicle, and
the processor (470) is configured to perform control such that the first rear wheel is braked and thus fixed, the second rear wheel is released, and the first front wheel and the second front wheel are driven so as to turn the vehicle body.

6. The vehicle (100) comprising a parking control apparatus (400) according to claim 1, wherein the vehicle (100) is a four wheel drive vehicle, and
the processor (470) is configured to perform control such that the first rear wheel and the second rear wheel are braked at different ratios, and the first front wheel and the second front wheel are driven so as to turn the vehicle body.

7. The vehicle (100) comprising a parking control apparatus (400) according to claim 1, wherein
the vehicle (100) is a rear wheel drive vehicle, and
the processor (470) is configured to perform control such that the first rear wheel is braked and thus fixed, and the second rear wheel is driven so as to turn the vehicle body.

8. The vehicle (100) comprising a parking control apparatus (400) according to any one of claims 1 to 7, further comprising:
a plurality of in-wheel motors (1510, 1520, 1530, 1540) corresponding to the wheels, wherein
the processor (470) is configured to individually control the in-wheel motors so as to individually drive the wheels.

9. The vehicle (100) comprising a parking control apparatus (400) according to any one of claims 1 to 8,
wherein the processor (470) is configured to perform control such that the first rear wheel is fixed, and the remaining wheels, excluding the first rear wheel, are individually braked, released, or driven so as to turn the vehicle body about the first rear wheel as the axis,
wherein the processor (470) is configured to perform control so as to turn the vehicle body such that the vehicle body is aligned with the parking space, and
wherein the processor (470) is configured to drive at least one of the wheels such that the first rear wheel is located at the first prediction point.

10. The vehicle (100) comprising a parking control apparatus according to any one of claims 1 to 9, wherein
the processor (470) is configured to perform control such that those among the wheels that are connected to a steering wheel are directed to a left or a right,
wherein the processor (470) is configured to perform control such that the first rear wheel is fixed, and the remaining wheels, excluding the first rear wheel, are individually braked, released, or driven so as to turn the vehicle body about the first rear wheel as the axis, wherein the processor (470) is configured to perform control such that those among the wheels that are connected to the steering wheel are directed to the left or the right in a state in which the first rear wheel is located at the first prediction point, and
wherein the processor (470) is configured to perform control such that the first rear wheel is fixed, and the remaining wheels, excluding the first rear wheel, are individually braked, released, or driven so as to turn the vehicle body about the first rear wheel as the axis such that the vehicle body is aligned with the parallel parking space.

11. The vehicle (100) comprising a parking control apparatus (400) according to any one of claims 1 to 10, wherein
the processor (470) is configured to perform control such that those among the wheels that are connected to a steering input device are directed to a left or a right in a forward direction of the vehicle, and
the processor (470) is configured to perform control so as to turn the vehicle body in a state in which the wheels connected to the steering input device are directed to the left or the right in the forward direction of the vehicle.

12. The vehicle (100) comprising a parking control apparatus (400) according to claim 11, wherein the processor (470) is configured to perform control such that the wheels connected to the steering input device are gradually directed in the forward direction of the vehicle in a simultaneous manner when individually braking, releasing, or driving the wheels.

## Patentansprüche

1. Ein Fahrzeug (100) mit einer Parksteuervorrichtung (400), wobei die Parksteuervorrichtung (400) umfasst:
eine Mehrzahl von Rädern (500), die in einer Fahrzeugkarosserie vorgesehen sind; und
einen Prozessor (470) zur Durchführung einer derartigen Steuerung, dass die Räder einzeln gebremst, freigegeben oder angetrieben werden, um die Fahrzeugkarosserie um eine in eine Gesamthöhenrichtung gebildete Achse zu drehen,
wobei die Mehrzahl von Rädern (500) ein erstes Vorderrad (510), ein zweites Vorderrad (520), ein erstes Hinterrad (530) und ein zweites Hinterrad (540) umfasst,
wobei der Prozessor (470) konfiguriert ist:
nach einem Parkplatz (1805, 2005) zu suchen durch eine Parkplatz-Sucheinheit (410) und Informationen über den Parkplatz (1805, 2005) zu erlangen,
einen Parkmodus zwischen einem senkrechten Parkmodus und einem parallelen Parkmodus zu bestimmen, basierend auf den erlangten Informationen über den Parkplatz (1805, 2005),
einen ersten Punkt (1820, 2020) entsprechend einer Position des ersten abzubremsenden Hinterrades (530) zu bestimmen,
die Steuerung so durchzuführen, dass das erste Hinterrad (530) gebremst und somit an dem ersten Punkt (1820, 2020) fixiert wird; und
eine Steuerung so durchzuführen, dass mindestens eines des ersten Vorderrads (510), des zweiten Vorderrads (520) und des zweiten Hinterrads (540) angetrieben wird, um dadurch die Fahrzeugkarosserie um das erste Hinterrad (530) als Achse zu drehen, und
wobei der Prozessor (470) ferner so konfiguriert ist, Höhen von Aufhängungsgeräten (600) so zu steuern, dass eine Höhe eines ersten Aufhängungsgeräts, die dem ersten Hinterrad (530) entspricht, niedriger ist als Höhen der anderen Aufhängungsgeräte, wenn das Fahrzeug um das erste Hinterrad (530) gedreht wird,
**dadurch gekennzeichnet, dass**
der erste Punkt (1820, 2020) ein Punkt ist, in dem ein kürzester Abstand zwischen dem Fahrzeug (100) und nahegelegenen Fahrzeugen gleich oder größer ist als ein Referenzabstand in einem Zustand, in dem sich das erste Hinterrad (530) an dem ersten Punkt (1820, 2020) befindet,
falls der senkrechte Parkmodus auf der Grundlage der erlangten Informationen über den Parkplatz (1805, 2005) gewählt ist, der Prozessor (470) konfiguriert ist:
einen ersten Vorhersagepunkt (1811) zu bestimmen, an dem sich das erste Hinterrad (530) in einem Zustand befinden wird, in dem senkrechtes Einparken in den Parkplatz (1805) abgeschlossen ist, und
einen zweiten Vorhersagepunkt (1812) zu bestimmen, an dem sich das erste Vorderrad (510) in einem Zustand befinden wird, in dem senkrechtes Einparken in den Parkplatz (1805) abgeschlossen ist,
wobei der erste Punkt (1820) ausgerichtet ist mit dem ersten Vorhersagepunkt (1811) und dem zweiten Vorhersagepunkt (1812), und
wobei das erste Hinterrad (530) und das erste Vorderrad (510) auf einer gleichen Seite des Fahrzeugs (100) angeordnet sind, und
falls der parallele Parkmodus auf der Grundlage der erlangten Informationen über den Parkplatz gewählt wird (1805, 2005), der Prozessor (470) konfiguriert ist:
einen ersten Vorhersagepunkt (2011) zu bestimmen, an dem sich das erste Hinterrad (530) in einem Zustand befinden wird, in dem paralleles Parken in dem Parkplatz (2005) abgeschlossen ist, wobei der Parkplatz (2005) ein paralleler Parkplatz ist, der zwischen einem ersten nahegelegenen Fahrzeug (2051) und einem zweiten nahegelegenen Fahrzeug (2052) definiert ist, und
den ersten Punkt (2020) auf der Grundlage des ersten Vorhersagepunktes (2011), einer Position des ersten nahegelegenen Fahrzeugs (2051) und eines Abstands zwischen dem ersten nahegelegenen Fahrzeug (2051) und dem Fahrzeug (100) in einer Gesamtbreiterichtung zu bestimmen.

2. Das Fahrzeug (100) mit einer Parksteuervorrichtung (400) nach Anspruch 1, wobei
das Fahrzeug (100) ein frontangetriebenes Fahrzeug ist, und
der Prozessor (470) konfiguriert ist, die Steuerung so auszuführen, dass das erste Hinterrad gebremst und somit fixiert wird, das zweite Hinterrad freigegeben wird und das erste Vorderrad und das zweite Vorderrad so angetrieben werden, dass sie die Fahrzeugkarosserie drehen.

3. Das Fahrzeug (100) mit einer Parksteuervorrichtung (400) nach Anspruch 1, wobei
das Fahrzeug (100) ein frontangetriebenes Fahrzeug ist, und
der Prozessor (470) konfiguriert ist, die Steuerung so auszuführen, dass das erste Hinterrad und das zweite Hinterrad mit unterschiedlichen Verhältnissen gebremst werden, und das erste Vorderrad und das zweite Vorderrad so angetrieben werden, dass sie die Fahrzeugkarosserie drehen.

4. Das Fahrzeug (100) mit einer Parksteuervorrichtung (400) nach Anspruch 1, wobei
das Fahrzeug (100) ein allradangetriebenes Fahrzeug ist, und
der Prozessor (470) konfiguriert ist, die Steuerung so auszuführen, dass das erste Hinterrad gebremst und somit fixiert wird, und das erste Vorderrad, das zweite Vorderrad und das zweite Hinterrad so angetrieben werden, dass sie die Fahrzeugkarosserie drehen.

5. Das Fahrzeug (100) mit einer Parksteuervorrichtung (400) nach Anspruch 1, wobei
das Fahrzeug (100) ein allradangetriebenes Fahrzeug ist, und
der Prozessor (470) konfiguriert ist, die Steuerung so auszuführen, dass das erste Hinterrad gebremst und somit fixiert wird, das zweite Hinterrad freigegeben wird und das erste Vorderrad und das zweite Vorderrad so angetrieben werden, dass sie die Fahrzeugkarosserie drehen.

6. Das Fahrzeug (100) mit einer Parksteuervorrichtung (400) nach Anspruch 1, wobei
das Fahrzeug (100) ein allradangetriebenes Fahrzeug ist, und
der Prozessor (470) konfiguriert ist, die Steuerung so auszuführen, dass das erste Hinterrad und das zweite Hinterrad mit unterschiedlichen Verhältnissen gebremst werden, und das erste Vorderrad und das zweite Vorderrad so angetrieben werden, dass sie die Fahrzeugkarosserie drehen.

7. Das Fahrzeug (100) mit einer Parksteuervorrichtung (400) nach Anspruch 1, wobei
das Fahrzeug (100) ein heckangetriebenes Fahrzeug ist, und
der Prozessor (470) konfiguriert ist, die Steuerung so auszuführen, dass das erste Hinterrad gebremst und somit fixiert wird, und das zweite Hinterrad so angetrieben wird, dass es die Fahrzeugkarosserie dreht.

8. Das Fahrzeug (100) mit einer Parksteuervorrichtung (400) nach einem der Ansprüche 1 bis 7, ferner umfassend
eine Vielzahl von In-Rad-Motoren (1510, 1520, 1530, 1540), die den Rädern entsprechen, wobei
der Prozessor (470) konfiguriert ist, die In-Rad-Motoren einzeln zu steuern, um die Räder einzeln anzutreiben.

9. Das Fahrzeug (100) mit einer Parksteuervorrichtung (400) nach einem der Ansprüche 1 bis 8,
wobei der Prozessor (470) konfiguriert ist, eine Steuerung derart durchzuführen, dass das erste Hinterrad fixiert ist und die übrigen Räder, mit Ausnahme des ersten Hinterrads, einzeln gebremst, freigegeben oder angetrieben werden, um die Fahrzeugkarosserie um das erste Hinterrad als Achse zu drehen,
wobei der Prozessor (470) konfiguriert ist, die Steuerung so auszuführen, dass die Fahrzeugkarosserie gedreht wird, dass die Fahrzeugkarosserie mit der Parklücke ausgerichtet ist, und
wobei der Prozessor (470) konfiguriert ist, mindestens eines der Räder so anzutreiben, dass sich das erste Hinterrad an dem ersten Vorhersagepunkt befindet.

10. Das Fahrzeug (100) mit einer Parksteuervorrichtung nach einem der Ansprüche 1 bis 9, wobei
der Prozessor (470) konfiguriert ist, eine Steuerung so durchzuführen, dass diejenigen unter den Rädern, die mit einem Lenkrad verbunden sind, nach links oder rechts gerichtet sind,
wobei der Prozessor (470) konfiguriert ist, eine Steuerung so durchzuführen, dass das erste Hinterrad fixiert ist und die übrigen Räder, mit Ausnahme des ersten Hinterrads, einzeln gebremst, freigegeben oder so angetrieben werden, um die Fahrzeugkarosserie um das erste Hinterrad als Achse zu drehen, wobei der Prozessor (470) konfiguriert ist, eine Steuerung so auszuführen, dass diejenigen unter den Rädern, die mit dem Lenkrad verbunden sind, in einem Zustand, in dem sich das erste Hinterrad an dem ersten Vorhersagepunkt befindet, nach links oder rechts gerichtet sind, und
wobei der Prozessor (470) konfiguriert ist, eine Steuerung derart durchzuführen, dass das erste Hinterrad fixiert ist und die übrigen Räder, mit Ausnahme des ersten Hinterrads, einzeln gebremst, freigegeben oder angetrieben werden, um die Fahrzeugkarosserie um das erste Hinterrad als die Achse zu drehen, so dass die Fahrzeugkarosserie mit dem parallelen Parkplatz ausgerichtet ist.

11. Das Fahrzeug (100) mit einer Parksteuervorrichtung (400) nach einem der Ansprüche 1 bis 10, wobei
der Prozessor (470) konfiguriert ist, die Steuerung so auszuführen, dass diejenigen unter den Rädern, die mit einer Lenkeingabevorrichtung verbunden sind, nach links oder rechts in Vorwärtsrichtung des Fahrzeugs gerichtet sind, und
der Prozessor (470) konfiguriert ist, die Steuerung so auszuführen, dass die Fahrzeugkarosserie in einem Zustand gedreht wird, in dem die mit der Lenkeingabeeinrichtung verbundenen Räder nach links oder rechts in Vorwärtsrichtung des Fahrzeugs gerichtet sind.

12. Fahrzeug (100) mit einer Parksteuervorrichtung (400) nach Anspruch 11, wobei der Prozessor (470) konfiguriert ist, eine Steuerung derart durchzuführen, dass die mit der Lenkeingabevorrichtung verbundenen Räder allmählich auf gleichzeitige Weise in Vorwärtsrichtung des Fahrzeugs gerichtet werden, wenn die Räder einzeln gebremst, freigegeben oder angetrieben werden.

## Revendications

1. Véhicule (100) comprenant un appareil de commande de stationnement (400), l'appareil de commande de stationnement (400) comprenant :
une pluralité de roues (500) montée dans la carrosserie du véhicule ; et
un processeur (470) pour procéder à la commande de sorte que les roues soient freinées individuellement, relâchées ou entraînées de manière à faire tourner la carrosserie du véhicule autour d'un axe formé dans une direction de hauteur hors tout,
la pluralité des roues (500) comprenant une première roue avant (510), une seconde roue avant (520), une première roue arrière (530), et une seconde roue arrière (540),
le processeur (470) étant conçu pour :
rechercher une place de stationnement (1805, 2005) par l'intermédiaire d'une unité de recherche de place de stationnement (410) et acquérir des informations relatives à la place de stationnement (1805, 2005),
déterminer un mode de stationnement entre un mode de stationnement perpendiculaire et un mode de stationnement parallèle, en fonction des informations acquises relatives à la place de stationnement (1805, 2005),
déterminer un premier point (1820, 2020) correspondant à un emplacement de la première roue arrière (530) à freiner,
procéder à la commande de sorte que la première roue arrière (530) soit freinée et fixe ainsi dans le premier point (1820, 2020) ; et
procéder à la commande de sore que la première roue avant (510) et/ou la seconde roue avant (520) et la seconde roue arrière (540) soient entraînées pour ainsi faire tourner la carrosserie du véhicule autour de la première roue arrière (530) en tant qu'axe, et
le processeur (470) étant en outre conçu pour régler des hauteurs de dispositifs de suspension (600) de manière à ce qu'une hauteur d'un premier dispositif de suspension correspondant à la première roue arrière (530) soit inférieure aux hauteurs des autres dispositifs de suspension lorsque le véhicule est tourné autour de la première roue arrière (530),
**caractérisé en ce que**
le premier point (1820, 2020) étant un point où la distance la plus courte entre le véhicule (100) et les véhicules avoisinants est supérieure ou égale à une distance de référence lorsque la première roue arrière (530) est située au premier point (1820, 2020),
dans le cas où le mode de stationnement perpendiculaire est sélectionné en fonction des informations acquises concernant la place de stationnement (1805, 2005), le processeur (470) est conçu pour :
déterminer un premier point de prédiction (1811) auquel sera située la première roue arrière (530) lorsque le stationnement perpendiculaire sera terminé dans la place de stationnement (1805), et
déterminer un second point de prédiction (1812) auquel sera située la première roue avant (510) lorsque le stationnement perpendiculaire sera terminé dans la place de stationnement (1805),
le premier point (1820) étant aligné avec le premier point de prédiction (1811) et avec le second point de prédiction (1812), et
la première roue arrière (530) et la première roue avant (510) étant situées du même côté du véhicule (100), et
dans le cas où le mode de stationnement parallèle est sélectionné sur la base des informations acquises concernant la place de stationnement (1805, 2005), le processeur (470) est conçu pour :
déterminer un premier point de prédiction (2011) auquel sera située la première roue arrière (530) lorsque le stationnement parallèle sera terminé dans la place de stationnement (2005), la place de stationnement (2005) étant une place de stationnement parallèle définie entre un premier véhicule avoisinant (2051) et un second véhicule avoisinant (2052), et
déterminer le premier point (2020) en fonction du premier point de prédiction (2011), un emplacement du premier véhicule avoisinant (2051), et une distance entre le premier véhicule avoisinant (2051) et le véhicule (100) dans une direction de largeur hors tout.

2. Véhicule (100) comprenant un appareil de commande de stationnement (400) selon la revendication 1,
le véhicule (100) étant un véhicule à traction avant, et
le processeur (470) étant conçu pour procéder à la commande de sorte que la première roue avant soit freinée et ainsi fixe, la seconde roue arrière soit libérée, et la première roue avant et la seconde roue avant soient entraînées de manière à faire tourner la carrosserie du véhicule.

3. Véhicule (100) comprenant un appareil de commande de stationnement (400) selon la revendication 1,
le véhicule (100) étant un véhicule à traction avant, et
le processeur (470) étant conçu pour procéder à la commande de sorte que la première roue arrière et la seconde roue arrière soient freinées à différentes vitesses, et la première roue avant et la seconde roue avant soient entraînées de manière à faire tourner la carrosserie du véhicule.

4. Véhicule (100) comprenant un appareil de commande de stationnement (400) selon la revendication 1,
le véhicule (100) étant un véhicule à quatre roues motrices, et
le processeur (470) étant conçu pour procéder à la commande de sorte que la première roue arrière soit freinée et ainsi fixe, la première roue avant, la seconde roue avant et la seconde roue arrière soient entraînées de manière à faire tourner la carrosserie du véhicule.

5. Véhicule (100) comprenant un appareil de commande de stationnement (400) selon la revendication 1,
le véhicule (100) étant un véhicule à quatre roues motrices, et
le processeur (470) étant conçu pour procéder à la commande de sorte que la première roue arrière soit freinée et ainsi fixe, la seconde roue arrière soit libérée, et la première roue avant et la seconde roue avant soient entraînées de manière à faire tourner la carrosserie du véhicule.

6. Véhicule (100) comprenant un appareil de commande de stationnement (400) selon la revendication 1,
le véhicule (100) étant un véhicule à quatre roues motrices, et
le processeur (470) étant conçu pour procéder à la commande de sorte que la première roue arrière et la seconde roue arrière soient freinées à différentes vitesses, et la première roue avant et la seconde roue avant soient entraînées de manière à faire tourner la carrosserie du véhicule.

7. Véhicule (100) comprenant un appareil de commande de stationnement (400) selon la revendication 1,
le véhicule (100) étant un véhicule à traction arrière, et
le processeur (470) étant conçu pour procéder à la commande de sorte que la première roue arrière soit freinée et ainsi fixe, et la seconde roue arrière soit entraînée de manière à faire tourner la carrosserie du véhicule.

8. Véhicule (100) comprenant un appareil de commande de stationnement (400) selon l'une quelconque des revendications 1 à 7, comprenant en outre :
une pluralité de moteurs dans la roue (1510, 1520, 1530, 1540) correspondant aux roues,
le processeur (470) étant conçu pour commander individuellement les moteurs dans la roue de manière à entraîner individuellement les roues.

9. Véhicule (100) comprenant un appareil de commande de stationnement (400) selon l'une quelconque des revendications 1 à 8,
le processeur (470) étant conçu pour procéder à la commande de manière à ce que la première roue avant soit fixe, et que les roues restantes, sauf la première roue arrière, soient freinées individuellement, libérées ou entraînées de manière à faire tourner la carrosserie du véhicule autour de la première roue arrière en tant qu'axe,
le processeur (470) étant conçu pour procéder à la commande de manière à faire tourner la carrosserie du véhicule de sorte que la carrosserie du véhicule s'aligne avec la place de stationnement, et
le processeur (470) étant conçu pour entraîner au moins l'une des roues de manière à ce que la première roue arrière soit située dans le premier point de prédiction.

10. Véhicule (100) comprenant un appareil de commande de stationnement (400) selon l'une quelconque des revendications 1 à 9,
le processeur (470) étant conçu pour procéder à la commande de sorte que celles parmi les roues qui sont reliées à la roue de direction soient dirigées vers la droite ou la gauche
le processeur (470) étant conçu pour procéder à la commande de sorte que la première roue arrière soit fixe, et les roues restantes, sauf la première roue arrière, soient individuellement freinées, libérées ou entraînées de manière à faire tourner la carrosserie du véhicule autour de la première roue arrière en tant qu'axe, le processeur (470) étant conçu pour procéder à la commande de sorte que certaines roues qui sont reliées à la roue de direction soient dirigées vers la gauche ou la droite lorsque la première roue arrière est située dans le premier point de prédiction, et
le processeur (470) étant conçu pour procéder à la commande de sorte que la première roue arrière soit fixe, et que les roues restantes, sauf la première roue arrière, soient individuellement freinées, libérées ou entraînées de manière à faire tourner la carrosserie du véhicule autour de la première roue arrière en tant qu'axe de sorte que la carrosserie du véhicule soit alignée avec la place de stationnement parallèle.

11. Véhicule (100) comprenant un appareil de commande de stationnement (400) selon l'une quelconque des revendications 1 à 10,
le processeur (470) étant conçu pour procéder à la commande de sorte que certaines roues qui sont reliées à un dispositif d'entrée de direction soient dirigées vers une gauche ou une droite dans une direction avant du véhicule, et
le processeur (470) étant conçu pour procéder à la commande de manière à faire tourner la carrosserie du véhicule lorsque les roues reliées au dispositif d'entrée de direction sont dirigées vers la gauche ou vers la droite dans la direction avant du véhicule.

12. Véhicule (100) comprenant un appareil de commande de stationnement (400) selon la revendication 11, le processeur (470) étant conçu pour procéder à la commande de sorte que les roues reliées au dispositif d'entrée de direction soient graduellement dirigées dans la direction avant du véhicule simultanément lors du freinage individuelle, de la libération ou de l'entraînement des roues.
